# EUROPÄISCHE PATENTSCHRIFT

(11) **EP 0 793 610 B1**
(45) Veröffentlichungstag und Bekanntmachung des Hinweises auf die Patenterteilung: **20.10.1999**
(21) Anmeldenummer: 95941052.3
(22) Anmeldetag: 29.11.1995
(51) Int. Cl.: B65G 39/16

(54) **FÖRDERBANDTRÄGER**
CONVEYOR BELT SUPPORT
SUPPORT DE BANDE TRANSPORTEUSE

(30) Priorität: 29.11.1994 DE 4442464; 28.08.1995 DE 19531580
(43) Veröffentlichungstag der Anmeldung: 10.09.1997
(73) Patentinhaber: BEBRO-ELECTRONIC BENGEL & BROSS GmbH, D-72636 Frickenhausen (DE)
(72) Erfinder: FROMM, Alfred, D-72768 Reutlingen (DE)
(74) Vertreter: Beck, Jürgen, Dr. Dipl.-Phys.
(86) Internationale Anmeldenummer: EP9504703
(87) Internationale Veröffentlichungsnummer: WO9616885

(56) Entgegenhaltungen:
- GB-A- 416 367
- GB-A- 618 850
- GB-A- 623 329
- US-A- 2 869 712
- US-A- 3 603 451
- US-A- 3 693 781

## Beschreibung

Die Erfindung betrifft einen Förderbandträger für Bandförderer, umfassend ein Gestell, welches ein Grundgestell und ein um eine Drehachse gegenüber dem Grundgestell schwenkbares Drehgestell umfaßt, mindestens eine an dem Drehgestell angeordnete Tragrolle für ein Förderband des Bandförderers, welche sich mit ihrer Rollenachse quer zu einer Längsrichtung des Förderbands erstreckt und auf welcher das Förderband mit einer Unterseite aufliegt, zusätzlich zu der Tragrolle vorgesehene Ausrichtrollen zum Halten des Förderbandes in einer mittigen Position des Bandförderers, welche so angeordnet sind, daß das auf der Tragrolle laufende Förderband bei dem seitlichen Herauslaufen aus der mittigen Position auf mindestens eine der Ausrichtrollen einwirkt und dabei das Drehgestell mit der Tragrolle in eine Drehstellung verschwenkt, in welcher die Tragrolle das Förderband in Richtung seiner mittigen Position führt.

Bei den bekannten Bandförderern werden die Förderbandträger in Abständen aufeinanderfolgend angeordnet, um das Förderband, auf welchem jegliche Art von Gütern transportiert werden kann, durch die feststehende Tragrolle zu führen und auf seiner Unterseite abzustützen.

Bei derartigen Bandförderern besteht das Problem, daß das Förderband vielfach, beispielsweise durch ungleichmäßige Beladung, aus seiner mittigen Position, in welcher es symmetrisch zu der mindestens einen Tragrolle angeordnet ist, herausläuft und somit die Tendenz hat, seitlich über die Tragrolle hinauszulaufen oder seitlich, beispielsweise am Förderbandträger, anzustoßen und somit eine Störung des Bandförderers herbeizuführen.

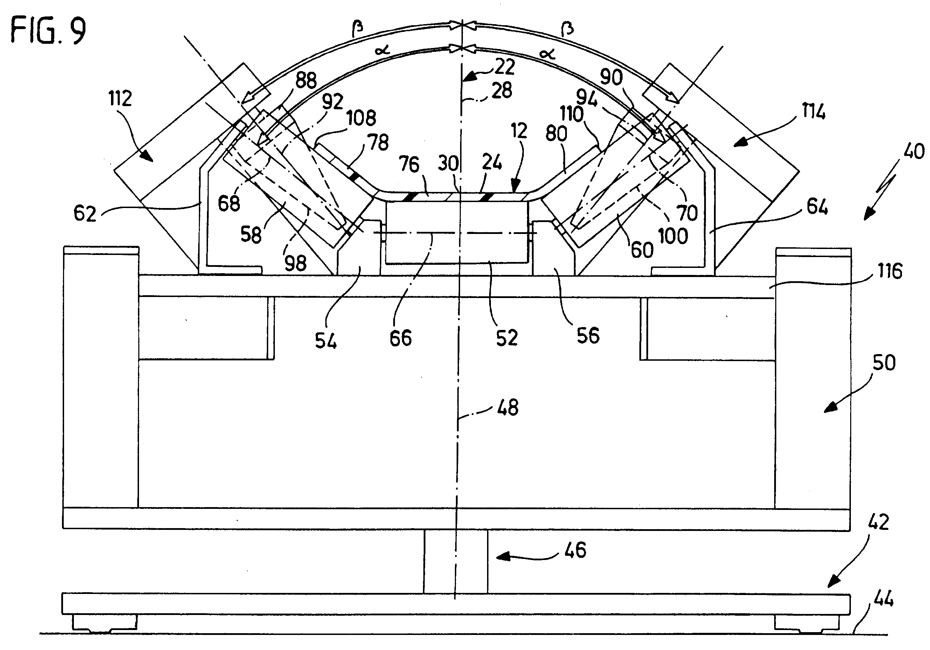

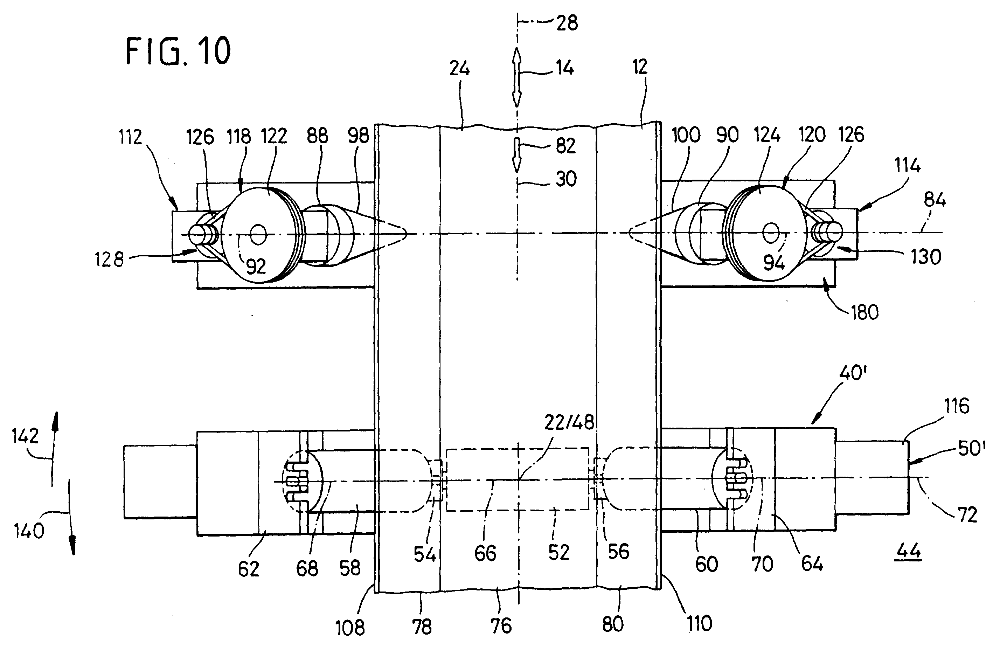

Ein Förderbandträger mit den eingangs beschriebenen Merkmalen ist aus der US 3,693,781 bekannt. Bei einem derartigen Förderbandträger sind, wie sich insbesondere aus Fig. 9 und 10, ergibt, die Ausrichtrollen auf einer kippbaren Welle gelagert, wobei die Welle bei Berührung der jeweiligen Ausrichtrolle durch das Förderband kippt und hierdurch eine Betätigung der Schalter 1LS und 2LS erfolgt, die gemäß dem Schaltplan in Fig. 10 über dazwischengeschaltete Relais eine Umschaltung der Laufrichtung des Motors bewirken, der das Drehgestell entsprechend dreht.

Ein Förderbandträger mit den eingangs beschriebenen Merkmalen ist auch aus der US 3,603,451 bekannt, wobei bei dieser Lösung ein Drehen des Drehgestells mittels eines Hydraulikantriebs für das Drehgestell und zwei Hydraulikpumpen erfolgt, von denen jeweils eine einer der Ausrichtrollen zugeordnet ist.

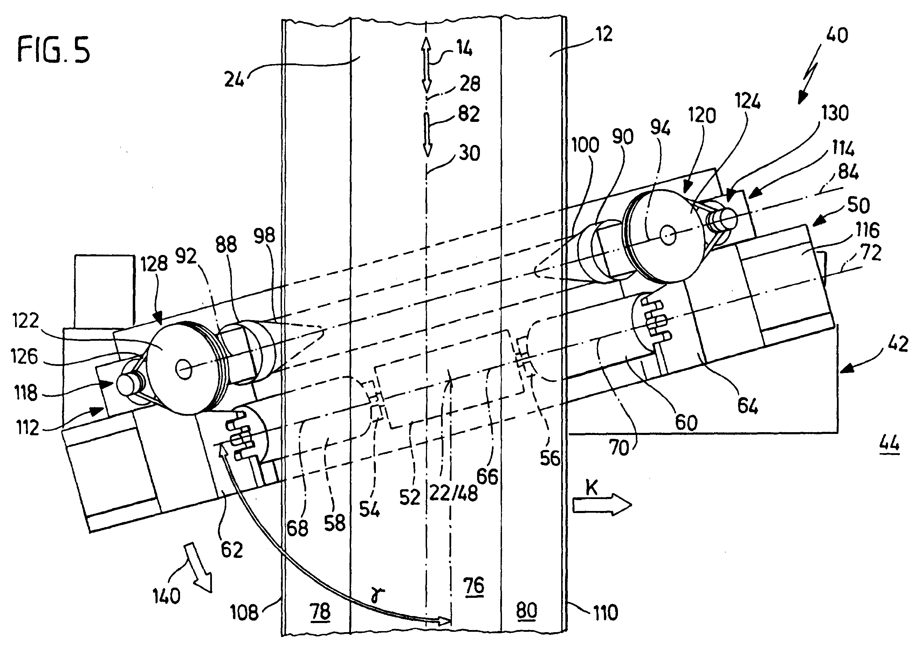

Die Ansteuerung des Hydraulikantriebs erfolgt dabei nach in den Fig. 5, 6 und 9 dargestellten Schaltschemata, die jedoch alle aufwendige und funktionskritische Bauteile notwendig machen, um die Bewegungsrichtung des Hydraulikantriebs eindeutig festzulegen.

Der Erfindung liegt daher die Aufgabe zugrunde, einen Förderbandträger für Bandförderer zu schaffen, welcher in der Lage ist, ein seitliches Herauslaufen des Förderbandes aus der mittigen Position präzise und funktionssicher zu korrigieren.

Diese Aufgabe wird bei einem Förderbandträger für Bandförderer, umfassend ein Gestell, welches ein Grundgestell und ein um eine Drehachse gegenüber dem Grundgestell schwenkbares Drehgestell umfaßt, mindestens eine an dem Drehgestell angeordnete Tragrolle für ein Förderband des Bandförderers, welche sich mit ihrer Rollenachse quer zu einer Längsrichtung des Förderbands erstreckt und auf welcher das Förderband mit einer Unterseite aufliegt, zusätzlich zu der Tragrolle vorgesehene Ausrichtrollen zum Halten des Förderbandes in einer mittigen Position des Bandförderers, welche so angeordnet sind, daß das auf der Tragrolle laufende Förderband bei dem seitlichen Herauslaufen aus der mittigen Position auf mindestens eine der Ausrichtrollen einwirkt und dabei das Drehgestell mit der Tragrolle in eine Drehstellung verschwenkt, in welcher die Tragrolle das Förderband in Richtung seiner mittigen Position führt, erfindungsgemäß dadurch gelöst, daß mit jeder Ausrichtrolle ein elektrisches, von deren Drehzahl abhängiges Signal erzeugbar ist und daß ein Schwenken des Drehgestells gegenüber dem Grundgestell über einen Stellantrieb entsprechend den von den Ausrichtrollen erzeugten drehzahlabhängigen Signalen erfolgt.

Der Vorteil dieser Lösung ist darin zu sehen, daß über das Erzeugen des elektrischen Signals und die davon abhängige Ansteuerung des Stellmotors in vorteilhafter Weise die Regelcharakteristik beim Verschwenken des Drehgestells beeinflußbar ist. Ferner ist es insbesondere auch möglich, die Laufrichtung des Förderbandes beliebig zu wählen und auch der Laufrichtung entsprechend zu regeln.

Im einfachsten Fall sieht diese Lösung vor, daß jede Ausrichtrolle einen Generator antreibt, welcher einen Speisestrom für den das Drehgestell drehenden Stellmotor erzeugt, so daß der Speisestrom unmittelbar das von der jeweiligen Ausrichtrolle erzeugte elektrische Signal darstellt.

Diese Lösung hat den großen Vorteil, daß das Drehgestell nicht separat mit einem Speisestrom für den Stellmotor versorgt werden muß, sondern daß jede Ausrichtrolle durch das Antreiben des ihr zugeordneten Generators den Speisestrom für den Stellmotor selbsttätig erzeugt, so daß der erfindungsgemäße Förderbandträger keine separate Stromzuführung benötigt, obwohl durch zusätzlich vorgeschaltete, auf den Speisestrom einwirkende Schaltkreise in einfacher Weise noch eine Beeinflussung der Regelcharakteristik möglich ist.

Alternativ hierzu ist vorgesehen, daß jede Ausrichtrolle einen Sensor treibt, welcher ein drehzahlabhängiges Signal für eine Steuerung liefert, welche ihrerseits den Speisestrom des Stellmotors steuert. Eine derartige Steuerung bietet den Vorteil, daß eine Verknüpfung des der Drehzahl entsprechenden Signals mit dem Speisestrom für den Stellmotor in beliebiger Art und Weise, beispielsweise gemäß Kennlinienfeldern, variierbar ist und somit in einfacher Art und Weise die Regelcharakteristik vorgebbar und für unterschiedliche Anwendungsfälle variierbar ist.

Alle mit einem elektrischen Signal arbeitenden Lösungen haben ferner den Vorteil, daß eine Drehrichtungsumkehr und somit eine der Drehrichtung des Antriebs des Generators oder Signalgebers ebenfalls keine Probleme bei der Ansteuerung des Stellmotors bereitet, so daß auch diese Lösungen für eine Umkehr der Laufrichtung des Förderbands geeignet sind.

Die eingangs genannte Aufgabe wird alternativ dazu bei einem Förderbandträger für Bandförderer, umfassend ein Gestell, welches ein Grundgestell und ein um eine Drehachse gegenüber dem Grundgestell schwenkbares Drehgestell umfaßt, mindestens eine an dem Drehgestell angeordnete Tragrolle für ein Förderband des Bandförderers, welche sich mit ihrer Rollenachse quer zu einer Längsrichtung des Förderbands erstreckt und auf welcher das Förderband mit einer Unterseite aufliegt, zusätzlich zu der Tragrolle vorgesehene Ausrichtrollen zum Halten des Förderbandes in einer mittigen Position des Bandförderers, welche so angeordnet sind, daß das auf der Tragrolle laufende Förderband bei dem seitlichen Herauslaufen aus der mittigen Position auf mindestens eine der Ausrichtrollen einwirkt und dabei das Drehgestell mit der Tragrolle in eine Drehstellung verschwenkt, in welcher die Tragrolle das Förderband in Richtung seiner mittigen Position führt, ein Hydrauliksystem, welches einen das Drehgestell gegenüber dem Grundgestell verschwenkenden Hydraulikantrieb und eine jeder der Ausrichtrollen zugeordnete Hydraulikpumpe umfaßt, erfindungsgemäß dadurch gelöst, daß jede der Hydraulikpumpen über eine dieser zugeordnete Saugleitung Hydraulikmedium aus dem Hydrauliktank ansaugt, daß eine der Hydraulikpumpen eine der zum Hydraulikantrieb führenden Druckleitungen speist und daß die andere Hydraulikpumpe die andere der zum Hydraulikantrieb führenden Druckleitungen speist, und daß das Hydrauliksystem ein zwischen den zwei zum Hydraulikantrieb führenden Druckleitungen liegendes Zwei-Druckventil umfaßt, welches die Druckleitung mit dem niedrigeren Druck über eine Rückleitung mit einem Hydrauliktank verbindet.

Die Verwendung eines Hydrauliksystems hat den großen Vorteil, daß insbesondere in explosionsgefährdeten Umgebungen keinerlei elektrische Leitungen und elektrische Kontakte erforderlich sind.

Ferner hat die Verwendung eines Hydrauliksystems den großen Vorteil, daß jeder erfindungsgemäße Förderbandträger autark ohne eigene separate Energiezufuhr arbeiten kann, wobei die Realisierung eines Hydrauliksystems eine besonders zuverlässig und unter rauhen Umgebungsbedingungen arbeitende Lösung darstellt.

Das erfindungsgemäß vorgesehene und zwischen zwei zum Hydraulikantrieb führenden Druckleitungen liegendes Zwei-Druckventil verbindet die Druckleitung mit dem niedrigeren Druck über eine Rückleitung mit dem Hydrauliktank und erreicht somit, daß stets nur eine der beiden Druckleitungen einen letztlich auf den Hydraulikantrieb wirkenden Druck erzeugt. Damit ist stets eindeutig vorgegeben, daß nur eine der beiden Druckleitungen auf den Hydraulikantrieb wirken und diesen somit in nur einer Richtung bewegen kann.

Um eine derartige Realisierung auch so auszulegen, daß die Laufrichtung des Förderbandes umkehrbar ist, ist vorteilhafterweise vorgesehen, daß die Hydraulikpumpen beim Antrieb in zwei zueinander entgegengesetzten Drehrichtungen funktionsfähig sind, das heißt, daß die Hydraulikpumpen beispielsweise bei Umkehr der Drehrichtung in umgekehrter Richtung Hydraulikmedium fördern.

Hinsichtlich der Ausbildung des Hydrauliksystems im einzelnen wurden bislang keine näheren Angaben gemacht. So sieht ein besonders vorteilhaftes Ausführungsbeispiels vor, daß das Hydrauliksystem ein dem Hydraulikantrieb vorgeschaltetes doppeltentsperrbares Rückschlagventil umfaßt. Ein derartiges Rückschlagventil erlaubt, insbesondere bei Ausbildung des Hydraulikantriebs als Hydraulikzylinder, den Hydraulikzylinder bei Nichtanliegen eines Drucks, also bei nicht angetriebenen Ausrichtrollen, in der Stellung zu halten, in der er vorher gestanden ist, so daß dann, wenn die Ausrichtrollen nicht angetrieben sind, das Drehgestell gegen dem Grundgestell nicht frei bewegbar ist, sondern von dem durch das doppeltentsperrbare Rückschlagventil in seiner Stellung gehaltenen Hydraulikantrieb so lange stabil gehalten wird, bis das Förderband eine der Ausrichtrollen antreibt und dadurch wiederum im Hydrauliksystem ein Druck erzeugt wird.

Die Ausrichtrollen können prinzipiell so angeordnet sein, daß deren Rotationsachsen parallel zueinander oder in beliebigen Winkeln verlaufen.

Besonders vorteilhaft ist es, wenn die Ausrichtrollen so angeordnet sind, daß deren Außenmantel quer zur Förderrichtung gesehen über eine durch die Tragrolle definierte Auflagenfläche für das Förderband nach oben in Richtung des Förderbandes beiderseits des in mittiger Position laufenden Förderbands überstehen. Damit läßt sich in einfacher Weise erreichen, daß die Ausrichtrollen dann, wenn das Förderband aus der mittigen Position herausläuft, von diesem angetrieben werden.

Dies läßt sich besonders einfach dadurch realisieren, daß die Ausrichtrollen mit ihren Rotationsachsen V-förmig zueinander angeordnet sind.

In Relation zur von den Tragrollen definierten Auflagefläche für das Förderband läßt sich diese Ausrichtung der Ausrichtrollen besonders vorteilhaft dadurch definieren, daß die Ausrichtrollen mit ihren Rotationsachsen einen kleineren Winkel zwischen sich einschließen als seitliche Bereiche der durch die Tragrolle definierten Auflagefläche, auf welcher das Förderband in mittiger Position aufliegt.

Hinsichtlich der Anordnung der Ausrichtrollen relativ zu der oder den Tragrollen wurden bislang ebenfalls keine detaillierten Angaben gemacht.

Bei einer vorteilhaften erfindungsgemäßen Lösung ist vorgesehen, daß die Ausrichtrollen mit ihren Rotationsachsen gemeinsam mit der Rollenachse der Tragrolle in einer Ebene liegen. Diese Lösung hat den Vorteil, daß die Ausrichtrollen in gleicher Weise wie die Tragrolle verschwenkbar sind und außerdem den Vorteil, daß die Laufrichtung des Förderbandes umkehrbar ist, ohne die Funktion der erfindungsgemäßen Lösung zu beeinflussen, sofern die durch die Ausrichtrollen ausgelöste Schwenkbewegung der Tragrolle stets so erfolgt, daß die Tragrolle das Förderband in Richtung seiner mittigen Position zurückführt.

Vorteilhafterweise sind dabei die Ausrichtrollen beiderseits der Tragrolle oder der Tragrollen angeordnet.

So könnten die Ausrichtrollen beispielsweise koaxial zur Tragrolle oder zu den Tragrollen angeordnet sein, wobei die Ausrichtrollen sich insbesondere in diesem Fall beiderseits des in mittiger Position stehenden Förderbandes an die Tragrolle oder die Tragrollen anschließen.

Alternativ dazu ist vorgesehen, die Rotationsachen der Ausrichtrollen in einer Ebene anzuordnen, welcher zur Ebene der Rollenachse oder der Rollenachsen der Tragrolle im Abstand angeordnet ist.

Dies wäre in Förderrichtung gesehen vor oder hinter den Ausrichtrollen möglich. Besonders vorteilhaft läßt sich die Drehung des erfindungsgemäß vorgesehenen Drehgestells dann einleiten, wenn die Ausrichtrollen in Förderrichtung gesehen vor der Tragrolle angeordnet sind, so daß das Förderband bei seiner Bewegung in Förderrichtung zuerst die Ausrichtrollen und dann die Trägerrolle oder die Trägerrollen passiert.

Ferner wäre es beispielsweise denkbar, die Ausrichtrollen relativ zum Grundgestell oder Drehgestell starr anzuordnen.

Eine besonders vorteilhafte Lösung ergibt sich jedoch dann, wenn die Ausrichtrollen quer zur Förderrichtung auf das Förderband zu oder von diesem wegbewegbar angeordnet sind, um dadurch noch zusätzlich einen weiteren Parameter zur Verfügung zu haben, mit welchem sich das durch die Einwirkung des Förderbandes auf die Ausrichtrollen erzeugte Regelverhalten beeinflussen läßt.

So sieht ein vorteilhaftes Beispiel vor, daß mit dem Schwenken des Drehgestells in eine das Förderband in die mittige Position zurückführende Schwenkstellung eine Bewegung der beim Herauslaufen des Förderbandes aus der mittigen Stellung angetriebenen Ausrichtrolle quer zur Förderrichtung in Richtung vom Förderband weg erfolgt, das heißt, daß die angetriebene Ausrichtrolle bei der Drehbewegung des Drehgestells sich ebenfalls quer zur Förderrichtung bewegt.

Damit läßt sich ein unerwünschtes Überlaufen der Ausrichtrolle durch das Förderband quer zur Förderrichtung verhindern. Ferner schafft die Querbewegung die Möglichkeit, die Regelcharakteristik der Ausrichtrolle positiv zu beeinflussen, da die Größe der Querbewegung der Ausrichtrolle durch besondere Wahl der konstruktiven Parameter vorgegeben werden kann. Besonders vorteilhaft ist es, wenn die Querbewegung der beim Herauslaufen angetriebenen Ausrichtrolle in Richtung vom Förderband weg so lange erfolgt, bis das Drehgestell eine maximale Schwenkstellung erreicht hat.

Eine besonders günstige Regelcharakteristik läßt sich dann erreichen, wenn in der maximalen Schwenkstellung des Drehgestells die zunächst beim Herauslaufen angetriebene Ausrichtrolle vom Förderband nicht mehr beaufschlagt wird und somit eine Schwenkbewegung des Drehgestells über die maximale Schwenkstellung hinaus in einfacher Weise durch die Bewegung der angetriebenen Ausrichtrolle quer zur Förderrichtung begrenzt werden kann.

Ferner hat es sich als vorteilhaft erwiesen, wenn mit dem Schwenken des Drehgestells in eine das Förderband in die mittige Position zurückführende Schwenkstellung eine Bewegung der der Seite des Herauslaufens des Förderbandes aus der mittigen Stellung gegenüberliegenden Ausrichtrolle quer zur Förderrichtung in Richtung auf das Förderband zu erfolgt. Damit kann diese zunächst nicht angetriebene Ausrichtrolle dem Förderband nachgeführt werden.

Insbesondere läßt sich damit erreichen, daß in der maximalen Schwenkstellung die der Seite des Herauslaufens aus der mittigen Position gegenüberliegende Ausrichtrolle soweit quer zur Förderrichtung bewegbar ist, daß diese in der maximalen Schwenkstellung des Drehgestells vom Förderband angetrieben ist, um damit ein langsames Zurückschwenken des Drehgestells in die Grundstellung einzuleiten.

Um das Drehgestell in die Grundstellung zurückzuschwenken, ist vorzugsweise vorgesehen, daß die der Seite des Herauslaufens aus der mittigen Position gegenüberliegende Ausrichtrolle beim Zurückschwenken des Drehgestells in die Grundstellung so lange angetrieben ist, bis das Drehgestell die Grundstellung erreicht hat.

Im einfachsten Fall ist vorgesehen, daß in der Grundstellung des Drehgestells und mittiger Position des Förderbandes dieses keine der Ausrichtrollen antreibt, so daß erst nach Herauslaufen des Förderbands aus der mittigen Position eine der beiden Ausrichtrollen auf der Seite des Herauslaufens angetrieben wird.

Vorzugsweise lassen sich die Bewegungen der Ausrichtrollen quer zur Förderrichtung besonders einfach dadurch herbeiführen, daß die Ausrichtrollen gesteuert durch die Schwenkbewegung des Drehgestells quer zur Förderrichtung bewegbar sind, so daß kein besonders gesteuertes Nachführen der Ausrichtrollen relativ zur Bewegung des Förderbands erfolgt, sondern die Steuerung der Bewegung der Ausrichtrollen direkt über die Schwenkbewegung des Drehgestells gesteuert ist, da diese Schwenkbewegung letztlich auch, dafür verantwortlich ist, daß das Förderband wieder in die Grundstellung zurückgeführt wird.

Aus Gründen der Einfachheit ist ferner vorteilhafterweise vorgesehen, daß beide Ausrichtrollen quer zur Förderrichtung gemeinsam bewegbar sind, so daß nicht für jede der Ausrichtrollen eine separate Steuerung der Bewegung erforderlich ist.

Im einfachsten Fall läßt sich die Bewegung der Ausrichtrollen quer zur Förderrichtung dadurch herbeiführen, daß beide Ausrichtrollen an dem Drehgestell angeordnet sind und somit mit dem Drehgestell gemeinsam relativ zum Förderband verschwenkbar sind.

Die Bewegung der Ausrichtrollen quer zur Förderrichtung läßt sich in Kombination mit der Schwenkbewegung des Drehgestells besonders einfach dadurch erreichen, daß die Ausrichtrollen mit ihren Rotationsachsen in einer Ebene liegen, welche im Abstand von der Drehachse angeordnet ist, wobei die Ebene vorzugsweise parallel zur Drehachse verläuft, um einen Querschlupf beim Antrieb der Ausrichtrollen zu vermeiden.

Mit der Art und Weise, wie über die Ausrichtrollen ein Drehen des Drehgestells erfolgt, wurden bislang keine näheren Angaben gemacht, so sieht ein vorteilhaftes Ausführungsbeispiel vor, daß mit jeder Ausrichtrolle ein elektrisches, von deren Drehzahl abhängiges Signal erzeugbar ist und daß ein Schwenken des Drehgestells gegenüber dem Grundgestell über einen Stellmotor entsprechend den von den Ausrichtrollen erzeugten Signalen erfolgt.

Der Vorteil dieser Lösung ist darin zu sehen, daß über das Erzeugen des elektrischen Signals und die davon abhängige Ansteuerung des Stellmotors in vorteilhafter Weise die Regelcharakteristik beim Verschwenken des Drehgestells beeinflußbar ist. Ferner ist es insbesondere auch möglich, die Laufrichtung des Förderbandes beliebig zu wählen und auch der Laufrichtung entsprechend zu regeln.

Im einfachsten Fall sieht diese Lösung vor, daß jede Ausrichtrolle einen Generator antreibt, welcher einen Speisestrom für den das Drehgestell drehenden Stellmotor erzeugt, so daß der Speisestrom unmittelbar das von der jeweiligen Ausrichtrolle erzeugte elektrische Signal darstellt.

Diese Lösung hat den großen Vorteil, daß das Drehgestell nicht separat mit einem Speisestrom für den Stellmotor versorgt werden muß, sondern daß jede Ausrichtrolle durch das Antreiben des ihr zugeordneten Generators den Speisestrom für den Stellmotor selbsttätig erzeugt, so daß der erfindungsgemäße Förderbandträger keine separate Stromzuführung benötigt, obwohl durch zusätzlich vorgeschaltete, auf den Speisestrom einwirkende Schaltkreise in einfacher Weise noch eine Beeinflussung der Regelcharakteristik möglich ist.

Alternativ hierzu ist vorgesehen, daß jede Ausrichtrolle einen Sensor treibt, welcher ein drehzahlabhängiges Signal für eine Steuerung liefert, welche ihrerseits den Speisestrom des Stellmotors steuert. Eine derartige Steuerung bietet den Vorteil, daß eine Verknüpfung des der Drehzahl entsprechenden Signals mit dem Speisestrom für den Stellmotor in beliebiger Art und Weise, beispielsweise gemäß Kennlinienfeldern, variierbar ist und somit in einfacher Art und Weise die Regelcharakteristik vorgebbar und für unterschiedliche Anwendungsfälle variierbar ist.

Alle mit einem elektrischen Signal arbeitenden Lösungen haben ferner den Vorteil, daß eine Drehrichtungsumkehr und somit eine Umkehr der Drehrichtung des Antriebs des Generators oder Signalgebers ebenfalls keine Probleme bei der Ansteuerung des Stellmotors bereitet, so daß auch diese Lösungen für eine Umkehr der Laufrichtung des Förderbands geeignet sind.

Alternativ zu einem elektrisch gesteuerten Antrieb des Verschwenkens des Drehgestells sieht eine weitere Lösung vor, daß zum Verschwenken des Drehgestells gegenüber dem Grundgestell ein mechanisches Getriebe vorgesehen ist und daß das mechanische Getriebe seinerseits mechanisch über die Ausrichtrollen antreibbar ist. Ein derartiges mechanisches Getriebe hat den Vorteil, daß keine elektrischen Bauelemente erforderlich sind und in bestimmten Anwendungsfällen, wie zum Beispiel explosionsgefährdeten Umgebungen, in denen elektrische Bauelemente Probleme bereiten könnten, ein einfaches und über das mechanische Getriebe sowie den Antrieb desselben durch die Ausrichtrollen zwangsgesteuertes Schwenken des Drehgestells möglich ist. Im übrigen ist das mechanische Getriebe in der Lage, entsprechend der jeweiligen Laufrichtung zu regeln.

Vorzugsweise ist das mechanische Getriebe dabei so aufgebaut, daß beide Ausrichtrollen jeweils über Zahnräder ein gemeinsames Zahnrad antreiben, über welches dann ein Antrieb des Drehgestells zum Verschwenken desselben gegenüber dem Grundgestell erfolgt.

Vorzugsweise ist aber zwischen dem gemeinsam über die Ausrichtrollen angetriebenen Zahnrad des Getriebes eine Untersetzung vorgesehen, über welches dann das Getriebe die Drehbewegung des Drehgestells gegenüber dem Grundgestell antreibt.

Auch bei der Verwendung eines mechanischen Getriebes läßt sich dieselbe Funktion bei Umkehr der Laufrichtung des Förderbandes erreichen, da das mechanische Getriebe auch beim Umkehr der Drehrichtung und somit bei Antrieb der Ausrichtrollen in umgekehrter Richtung in gleicher Weise arbeitet.

Eine weitere vorteilhafte und zu den vorstehenden Lösungen alternative Lösung des Antriebs zum Verschwenken des Drehgestells relativ zum Grundgestell sieht vor, daß beide Ausrichtrollen Hydraulikpumpen eines Hydrauliksystems antreiben, welches einen das Drehgestell gegenüber dem Grundgestell vorschwenkenden Hydraulikantrieb umfaßt.

Die Verwendung eines Hydrauliksystems hat den großen Vorteil, daß insbesondere in explosionsgefährdeten Umgebungen keinerlei elektrische Leitungen und elektrische Kontakte erforderlich sind.

Ferner hat die Verwendung eines Hydrauliksystems den großen Vorteil, daß jeder erfindungsgemäße Förderbandträger autark ohne eigene separate Energiezufuhr arbeiten kann, wobei die Realisierung eines Hydrauliksystems eine besonders zuverlässig und unter rauhen Umgebungsbedingungen arbeitende Lösung darstellt.

Um eine derartige Realisierung auch so auszulegen, daß die Laufrichtung des Förderbandes umkehrbar ist, ist vorteilhafterweise vorgesehen, daß die Hydraulikpumpen beim Antrieb in zwei zueinander entgegengesetzten Drehrichtungen funktionsfähig sind, das heißt, daß die Hydraulikpumpen beispielsweise bei Umkehr der Drehrichtung in umgekehrter Richtung Hydraulikmedium fördern.

Hinsichtlich der Ausbildung des Hydrauliksystems im einzelnen wurden bislang keine näheren Angaben gemacht. So sieht ein besonders vorteilhaftes Ausführungsbeispiel vor, daß das Hydrauliksystem ein dem Hydraulikantrieb vorgeschaltetes doppeltentsperrbares Rückschlagventil umfaßt. Ein derartiges Rückschlagventil erlaubt, insbesondere bei Ausbildung des Hydraulikantriebs als Hydraulikzylinder, den Hydraulikzylinder bei Nichanliegen eines Drucks, also bei nicht angetriebenen Ausrichtrollen, in der Stellung zu halten, in der er vorher gestanden ist, so daß dann, wenn die Ausrichtrollen nicht angetrieben sind, das Drehgestell gegen dem Grundgestell nicht frei bewegbar ist, sondern von dem durch das doppeltentsperrbare Rückschlagventil in seiner Stellung gehaltenen Hydraulikantrieb so lange stabil gehalten wird, bis das Förderband eine der Ausrichtrollen antreibt und dadurch wiederum im Hydrauliksystem ein Druck erzeugt wird.

Eine weitere vorteilhafte Lösung sieht vor, daß das Hydrauliksystem ein zwischen zwei zum Hydraulikantrieb führenden Druckleitungen liegendes Zwei-Druckventil umfaßt, welches die Druckleitung mit dem niedrigeren Druck über eine Rückleitung mit einem Hydrauliktank verbindet und somit erreicht, daß stets nur eine der beiden Druckleitungen einen letztlich auf den Hydraulikantrieb wirkenden Druck erzeugt. Damit ist stets eindeutig vorgegeben, daß nur eine der beiden Druckleitungen auf den Hydraulikantrieb wirken und diesen somit in nur einer Richtung bewegen kann.

Bei einer weiteren erfindungsgemäßen Variante ist vorzugsweise vorgesehen, daß das Drehgestell frei gegenüber dem Grundgestell drehbar ist und daß das Drehgestell aufgrund des durch das aus der mittigen Position seitlich herauslaufenden Förderbandes erzeugten Drucks auf eine der Ausrichtrollen verschwenkbar ist, wobei vorzugsweise in diesem Fall die Ausrichtrollen so angeordnet sind, daß sie sich gemeinsam mit dem Drehgestell gekoppelt bewegen, so daß die auf die Ausrichtrollen durch das Förderband wirkende Kraft quer zur Förderrichtung auch auf das Drehgestell wirkt und dieses in eine das Förderband in die mittige Position zurückführende Stellung verschwenkt.

Vorzugsweise ist hierzu vorgesehen, daß die Ausrichtrollen mit ihren Rotationsachsen in einer Ebene liegen, welche im Abstand von der Drehachse angeordnet ist.

Im Zusammenhang mit der bisherigen Erläuterung der einzelnen Ausführungsbeispiele wurde nicht darauf eingegangen, wie die Tragrolle oder die Tragrollen ausgebildet sind.

Vorzugsweise ist nicht nur eine Tragrolle vorgesehen, sondern es sind mindestens zwei V-förmig relativ zueinander angeordnete Tragrollen vorgesehen, zwischen welchen das Förderband verläuft und auf welchen das Förderband aufliegt.

Bevorzugt ist eine Lösung, bei welcher eine mittige, im wesentlichen horizontal verlaufende Tragrolle und zwei seitlich der mittigen Tragrolle V-förmig relativ zueinander angeordnete Tragrollen vorgesehen sind.

Ein besonderer Vorteil des erfindungsgemäßen Förderbandträgers ist der, daß die Möglichkeit besteht, diesen zwischen konventionellen Förderbandträgern mit jeweils ebenfalls mindestens einer fest ausgerichteten Tragrolle anzuordnen, da sich die Verschiebung des Förderbands durch den erfindungsgemäßen Förderbandträger über große Distanzen des Förderbands hin auswirkt.

Die Art der Ausrichtrolle wurde bislang nicht spezifiziert. Prinzipiell ist es möglich, als Ausrichtrollen Rollen mit einem Zylindermantel vorzusehen, wobei bei Beaufschlagung der jeweiligen Ausrichtrolle durch das Förderband diese antreibbar ist.

Besonders vorteilhaft ist es jedoch, wenn die Ausrichtrollen einen rotationssymmetrischen Außenmantel mit einem in Axialrichtung variierenden Durchmesser aufweisen. Eine derart ausgebildete Ausrichtrolle schafft die Möglichkeit, über die Drehzahl der Ausrichtrolle zu erkennen, welcher Bereich des rotationssymmetrischen Außenmantels durch das Förderband, insbesondere eine Seitenkante desselben, angetrieben ist, da durch die Zuordnung unterschiedlicher Durchmesser zu unterschiedlichen Bereichen des Außenmantels ein Antreiben der Ausrichtrolle in diesen unterschiedlichen Bereichen zu unterschiedlichen Drehzahlen der Ausrichtrolle führt.

Eine geometrisch besonders einfache und geeignete Kontur eines Außenmantels sieht vor, daß der Außenmantel ein Kegelmantel ist. Bei einem derartigen Kegelmantel sind unterschiedliche Bereiche des Außenmantels unterschiedlichen Durchmessern eindeutig zugeordnet, so daß über die Drehzahl eindeutig erkennbar ist, in welchem Bereich des Außenmantels ein Antrieb der Ausrichtrolle erfolgt.

Hinsichtlich des Regelverhaltens bei der Schwenkbewegung des erfindungsgemäßen Drehgestells hat es sich als besonders günstig erwiesen, wenn die Ausrichtrollen so angeordnet sind, daß die dem kleinsten Durchmesser entsprechenden Bereiche des Außenmantels einander zugewandt sind und vorzugsweise die Bereiche des Außenmantels mit größtem Durchmesser voneinander abgewandt liegen.

Darüber hinaus betrifft die Erfindung einen Bandförderer, umfassend in Längsrichtung eines Förderbandes aufeinanderfolgend angeordnete Förderbandträger mit einem Grundgestell und mit starr gegenüber dem Grundgestell angeordnete Rollenachsen aufweisenden Tragrollen, wobei erfindungsgemäße nach ungefähr fünf bis ungefähr fünfzig derartigen Förderbandträgern ein Förderbandträger gemäß den vorstehend beschriebenen Ausführungsbeispielen vorgesehen ist.

Besonders vorteilhaft ist es, wenn ein derartiger vorstehend beschriebener Förderbandträger nach ungefähr zehn bis ungefähr dreißig konventionellen Förderbandträgern mit starr am Grundgestell angeordneten Rollenachsen angeordnet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf einen erfindungsgemäßen Bandförderer;
- Fig. 2: einen Schnitt längs Linie 2-2 in Fig. 1;
- Fig. 3: eine vergrößerte Draufsicht auf einen erfindungsgemäßen Förderbandträger in Grundstellung;
- Fig. 4: eine Ansicht ähnlich Fig. 2 bei seitlich herauslaufendem Förderband;
- Fig. 5: eine Draufsicht auf einen erfindungsgemäßen Förderbandträger ähnlich Fig. 3 in Schwenkstellung und zwar bei Bewegung in Richtung der maximalen Schwenkstellung;
- Fig. 6: eine Draufsicht ähnlich Fig. 5 und zwar in einer Schwenkstellung beim Zurückschwenken in Richtung der Grundstellung;

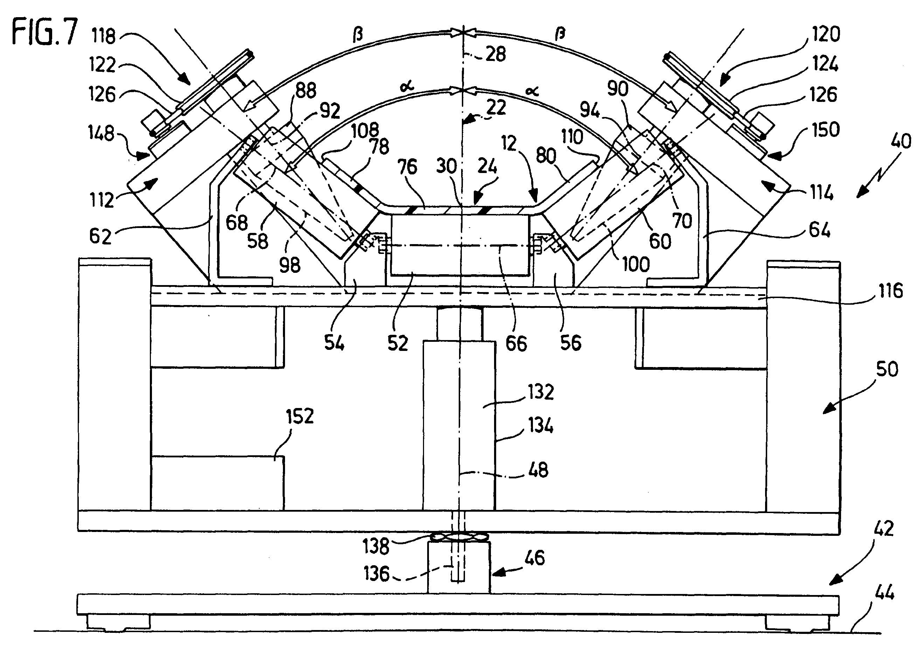

- Fig. 7: eine Ansicht ähnlich Fig. 2 eine Variante des ersten Ausführungsbeispiels;
- Fig. 8: eine Ansicht ähnlich Fig. 2 eines zweiten Ausführungsbeispiels;
- Fig. 9: eine Ansicht ähnlich Fig. 2 eines dritten Ausführungsbeispiels;
- Fig. 10: eine vergrößerte Draufsicht auf einen erfindungsgemäßen Förderbandträger eines vierten Ausführungsbeispiels in Grundstellung;
- Fig. 11: eine vergrößerte Draufsicht ähnlich Fig. 10 auf eine erste Variante des vierten Ausführungsbeispiels;
- Fig. 12: eine vergrößerte Draufsicht ähnlich Fig. 10 auf eine zweite Variante des vierten Ausführungsbeispiels;
- Fig. 13: eine schematische Darstellung eines fünften Ausführungsbeispiels basierend auf einem Drehgestell ausgebildet gemäß dem ersten Ausführungsbeispiel;
- Fig. 14: eine Ansicht ähnlich Fig. 2 eines sechsten Ausführungsbeispiels;
- Fig. 15: eine Ansicht ähnlich Fig. 3 des sechsten Ausführungsbeispiels;

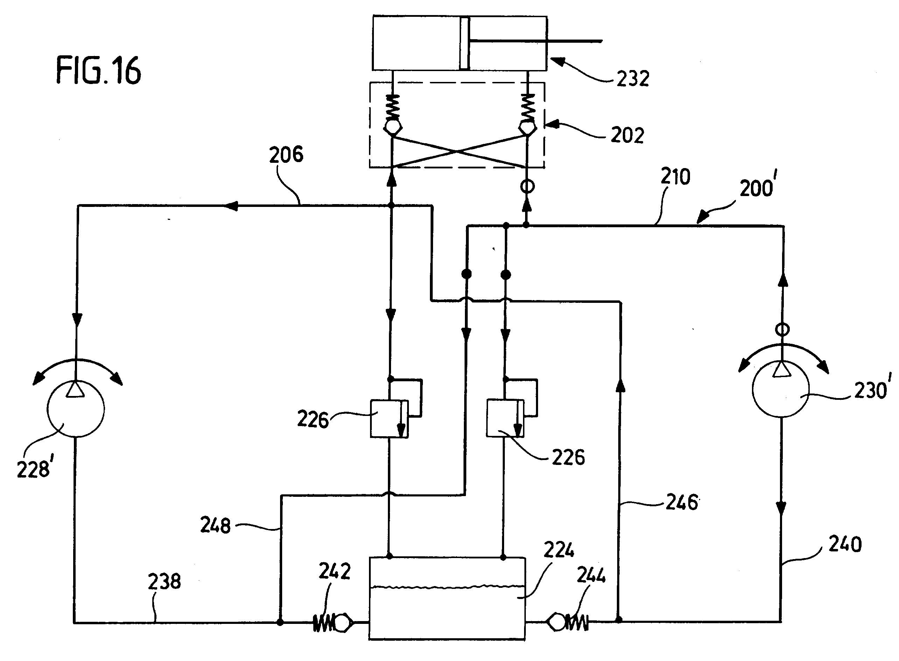

- Fig. 16: eine schematische Darstellung eines Hydrauliksystems für eine erste Variante des sechsten Ausführungsbeispiels;
- Fig. 17: eine schematische Darstellung einer zweiten Variante eines Hydrauliksystems für das sechste Ausführungsbeispiels;
- Fig. 18: eine Ansicht ähnlich Fig. 2 eines siebten Ausführungsbeispiels und
- Fig. 19: eine Ansicht ähnlich Fig. 3 des siebten Ausführungsbeispiels.

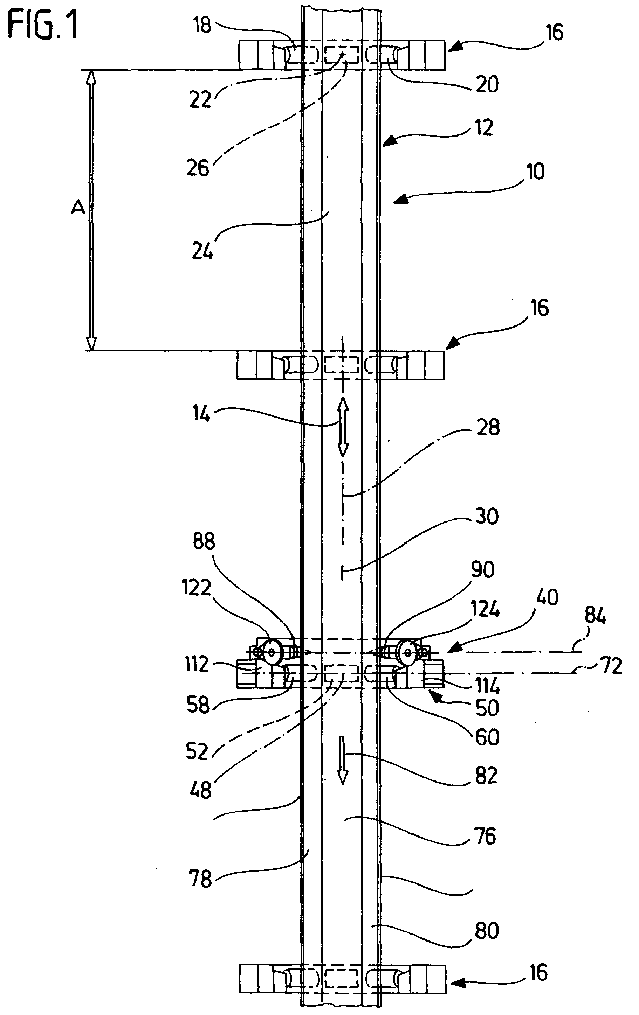

Ein Ausführungbeispiel eines erfindungsgemäßen Bandförderers, in Fig. 1 als Ganzes mit 10 bezeichnet, umfaßt ein Förderband 12, welches durch nicht dargestellte Antriebsrollen angetrieben ist und auf in beispielsweise regelmäßigen Abständen A in Längsrichtung 14 des Förderbandes angeordneten Förderbandträgern 16 aufliegt und von diesen abgestützt ist. Jeder dieser Förderbandträger umfaßt zwei V-förmig zueinander angeordnete Tragrollen 18 und 20, welche symmetrisch zu einer Symmetrieachse 22 angeordnet sind und mit dieser denselben Winkel einschließen, wobei die Symmetrieachse 22 im wesentlichen vertikal auf einer Förderfläche 24 steht, in welcher das Förderband 12 verläuft. Ferner ist das Förderband 12 noch mittig abgestützt durch eine mittige Tragrolle 26, welche sich parallel zur Förderfläche und beiderseits einer Symmetrieebene 28 erstreckt, die ihrerseits in der Längsrichtung 14 des Förderbandes 12 verläuft und die Symmetrieachse 22 des jeweiligen Förderbandträgers 16 schneidet.

Im Idealfall läuft das Förderband 12 in einer mittigen Position bezüglich der Förderbandträger 16, das heißt, daß die durch die Förderbandträger 16 definierte Symmetrieebene 28 eine Längsmitte des Förderbandes 12 schneidet.

Bei ungleichmäßiger Beladung des Förderbandes 12 kann dieses aus der mittigen Position herauslaufen, so daß die Längsmitte 30 desselben neben der durch die Förderbandträger 16 definierten Symmetrieebene 28 liegt.

Um ein derartiges Herauslaufen des Förderbandes 12 wieder zu korrigieren, ist anstelle eines der Förderbandträger 16 ein erfindungsgemäßer Förderbandträger 40 eingesetzt, wobei ein derartiger erfindungsgemäßer Förderbandträger in regelmäßigen Abständen, die ein ganzzahliges Vielfaches des Abstandes A betragen, einen üblichen Förderbandträger 16 ersetzt.

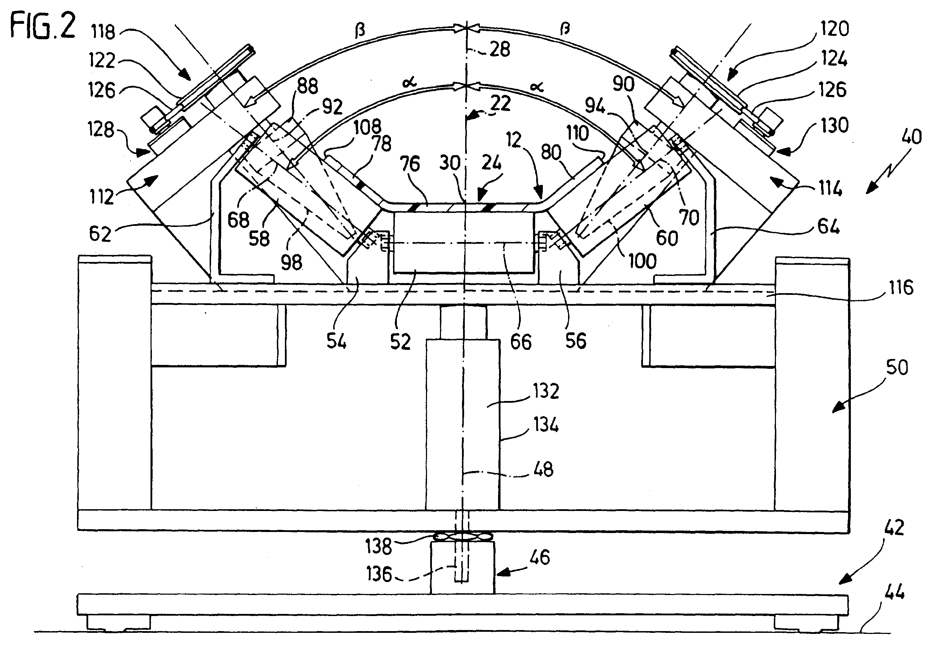

Ein derartiger erfindungsgemäßer Förderbandträger 40, dargestellt in Fig. 2, umfaßt ein Grundgestell 42, welches auf einer Bodenfläche 44 aufstellbar ist.

An dem Grundgestell 42 ist über ein Schwenklager 46 ein als Ganzes mit 50 bezeichnetes Drehgestell um eine Drehachse 48 schwenkbar gelagert, wobei die Drehachse 48 mit der Symmetrieachse 22 eines konventionellen Förderbandträgers zusammenfällt.

An dem Drehgestell 50 ist, wie bei einem der Förderbandträger 16, eine mittlere Tragrolle 52 zwischen zwei Lagerböcken 54 und 56 gelagert und beiderseits der mittleren Tragrolle sind V-förmig zueinander Tragrollen 58 und 60 angeordnet, wobei die Tragrolle 58 durch einen äußeren Lagerhalter 62 und den Lagerbock 54 gelagert ist und die Tragrolle 60 durch einen äußeren Lagerhalter 64 und den Lagerbock 56.

Wie bei den Förderbandträgern 16 ist die mittlere Tragrolle 52 um eine senkrecht zur Drehachse 48, vorzugsweise parallel zur Förderfläche 24 verlaufende Rollenachse 66 drehbar gelagert und die Tragrollen 58 und 60 sind um Rollenachsen 68 und 70 drehbar gelagert, die mit der Drehachse 48 denselben Winkel α einschließen wie die entsprechenden Rollenachsen der Tragrollen 18 und 20 mit der Symmetrieachse 22 bei den Förderbandträgern 16.

Die Rollenachsen 66, 68 und 70 liegen vorzugsweise in einer gemeinsamen Ebene 72, welche die Drehachse 48 und somit auch die Symmetrieachse 22 schneidet, jedoch um die Drehachse 48 durch Verschwenken des Drehgestells 50, welches die Tragrollen 52, 58 und 60 trägt, schwenkbar ist.

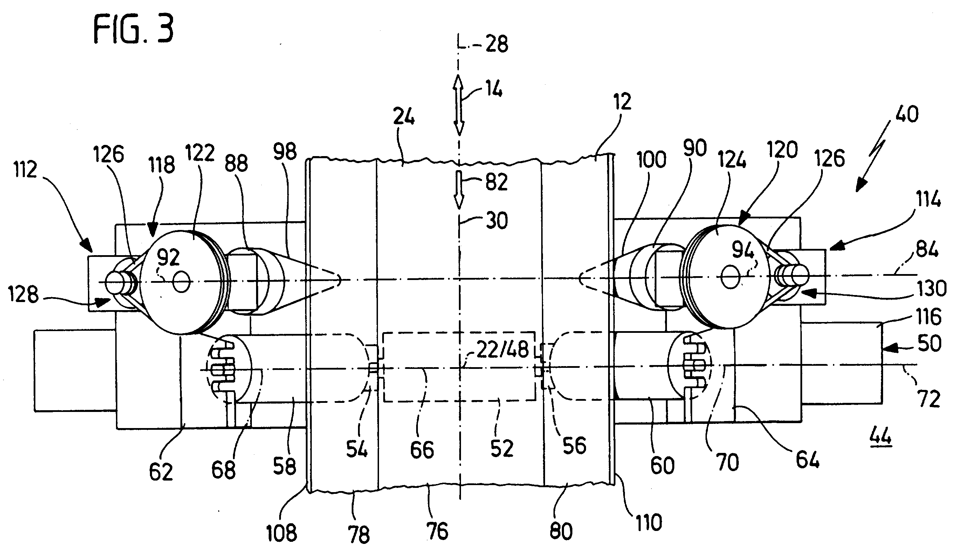

In mittiger Position des Förderbandes 12 verläuft auch die Längsmitte 30 desselben durch die Drehachse 48 und somit die Symmetrieachse 22 hindurch, wie in Fig. 2 und 3 dargestellt ist. Daher liegt das Förderband 12 mit einem mittleren Bereich 76 auf der mittleren Tragrolle 52 auf und mit beiderseits des mittleren Bereichs angeordneten seitlichen Bereichen 78 und 80 auf den Tragrollen 58 bzw. 60, wobei die seitlichen Bereiche 78 und 80 symmetrisch zur Drehachse 48 liegen und sich symmetrisch hierzu erstrecken.

Gegenüber der Ebene 72, und zwar entgegengesetzt zu einer Förderrichtung 82 des Förderbands 12 oder Laufrichtung desselben versetzt, sind in einer vorzugsweise zur Ebene 72 parallelen Ebene 84 Ausrichtrollen 88 und 90 jeweils um Rotationsachsen 92 und 94 drehbar angeordnet, wobei die Rotationsachsen 92 und 94 mit der sich in Längsrichtung 14 und durch die Drehachse 48 hindurch erstreckenden Symmetrieebene 28 einen Winkel β einschließen, welcher kleiner ist als der Winkel α.

Die Ausrichtrollen 88 und 90 weisen, wie in Fig. 2 und 3 dargestellt, als Außenmantel eine spitzkegelförmige Mantelfläche 98 bzw. 100 aus, wobei die Rotationsachse 92 bzw. 94 jeweils die Kegelachse darstellt und ein Durchmesser der Mantelfläche 98 mit zunehmendem Abstand von der Symmetrieebene 28 größer wird, so daß die Mantelflächen 98 bzw. 100 in Richtung der Symmetrieebene 28 sich verjüngen.

Die Ausrichtrollen 88 und 90 sind dabei so angeordnet, daß das Förderband 12 in seiner mittigen Position die Mantelflächen 98 und 100 mit seinen Seitenkanten 108 bzw. 110 nicht berührt, solange das Drehgestell, wie in Fig. 3 dargestellt, in einer Grundstellung steht, in welcher die Ebene 72 senkrecht zur Symmetrieebene 28 und senkrecht zur Förderrichtung 82 verläuft. Die Mantelflächen 98 und 100 stehen aber beiderseits des Förderbandes 12 über eine durch die Tragrollen 52, 58, 60 vorgegebene Auflagefläche nach oben über, wobei eine Längsmitte der Mantelflächen 98, 100 ungefähr in Höhe der Seitenkanten 108, 110 des Förderbandes 12 liegt.

Die Ausrichtrollen 88 und 90 sind ferner, wie in Fig. 2 und 3 dargestellt, vorzugsweise an Lagerträgern 112 und 114 gehalten und um die Rotationsachsen 92 und 94 drehbar gelagert, wobei die Lagerträger 112 und 114 ihrerseits auf einem Basisträger 116 des Drehgestells 50 sitzen, auf welchem ebenfalls die Lagerböcke 54 und 56 sowie die Lagerhalter 62 und 64 sitzen, an denen die Tragrollen 52, 58 und 60 gelagert sind.

Die Lagerträger 112 und 114 lagern dabei die Ausrichtrollen 88 und 90 vorzugsweise auf einer dem Förderband 12 abgewandten Seite.

Bei dem in Fig. 1 bis 3 dargestellten Ausführungsbeispiel sind die Ausrichtrollen 88 und 90 nicht frei drehbar, sondern treiben jeweils über ein als Ganzes mit 118 bzw. 120 bezeichnetes Getriebe, umfassend beispielsweise Riemenscheiben 122 und 124 sowie einen Treibriemen 126, jeweils einen Generator 128 bzw. 130, der jeweils Strom erzeugt und mit dessen Strom ein Stellmotor 132, ebenfalls angeordnet am Drehgestell 50, und zwar beispielsweise unterhalb des Basisträgers 116, antreibbar ist. Dieser Stellmotor 132 ist mit einem Gehäuse 134 fest mit dem Drehgestell 50 verbunden und mit einer Motorwelle 136 fest mit dem Grundgestell 42, so daß mit dem Stellmotor 132 eine Drehung des Drehgestells 50 relativ zum Grundgestell 42 herbeiführbar ist. Vorzugsweise durchgreift dabei die Motorwelle 136 ein das Drehgestell tragendes Axiallager 138, während die drehbar in dem Gehäuse 134 gelagerte Motorwelle 136 das Radiallager für das Schwenklager 46 bildet.

Die Generatoren 128 und 130 sind derart mit dem Stellmotor 132 verschaltet, daß ein Antrieb des jeweiligen Generators 128 bzw. 130 über die jeweilige durch das sich in Förderrichtung 82 bewegende Förderband getriebene Ausrichtrolle 88 bzw. 90, den Stellmotor 132 in unterschiedliche Richtungen und somit auch das Drehgestell 50 in unterschiedliche Richtungen dreht, wie nachfolgend noch im einzelnen beschrieben.

Ein derartiger Antrieb der Ausrichtrollen 88 bzw. 90 erfolgt im einfachsten Fall nicht bei in der Grundstellung stehendem Drehgestell 50 und in der mittigen Position verlaufendem Förderband 12, da bei einem derartigen Verlauf des Förderbands 12 die Seitenkanten 108 und 110 nicht auf den Mantelflächen 98 bzw. 100 der Ausrichtrollen 88 bzw. 90 anliegen und damit diese antreiben.

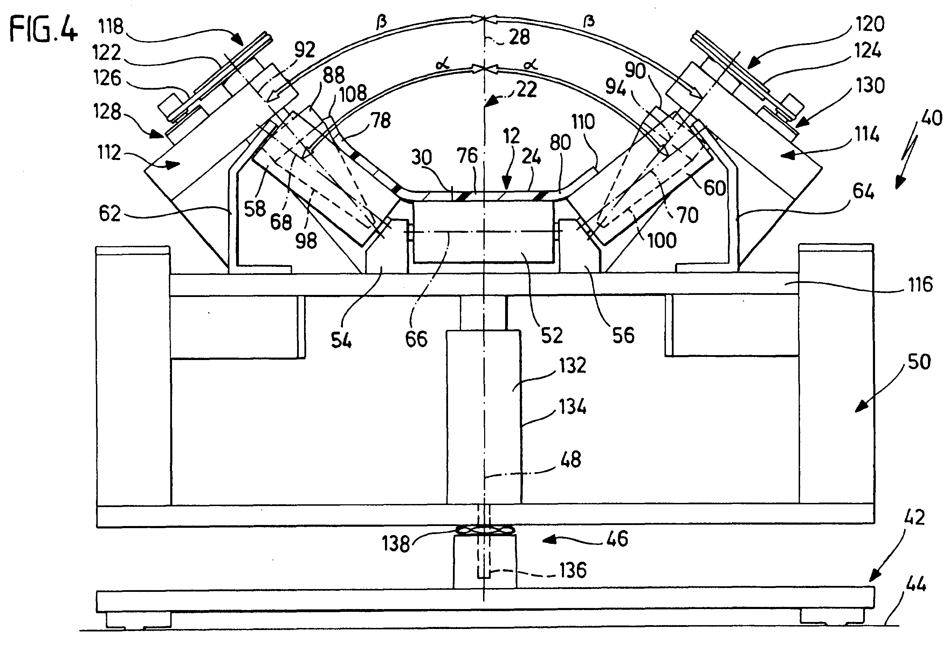

Ein Antrieb der Ausrichtrollen 88 bzw. 90, beispielsweise der Ausrichtrolle 88, erfolgt dann, wenn, wie in Fig. 4 dargestellt, das Förderband 12 aus der mittigen Position herausläuft, so daß die Längsmitte 30 des Förderbands 12 in Richtung der Ausrichtrolle 88 verschoben liegt. In diesem Fall kommt das Förderband 12 mit der Seitenkante 108 und einem sich daran anschließenden Teil des seitlichen Bereichs 78 auf der Mantelfläche 98 der Ausrichtrolle 88 zur Auflage - sofern das Drehgestell 50 in Grundstellung steht - und treibt die Ausrichtrolle 88 an. Dadurch wird über das Getriebe 118 der Generator 128 angetrieben und dieser erzeugt einen Strom, welcher den Stellmotor 132 speist, so daß dieser eine langsame Drehung des Drehgestells 50 um die Drehachse 48 in Richtung des Pfeils 140 einleitet und zwar, wie in Fig. 5 dargestellt so, daß die Ebene 72, in welcher die Rollenachse 66, 68 und 70 liegen, nicht mehr senkrecht zur Symmetrieebene 28 verläuft, sondern mit dieser einen derartigen Winkel einschließt, daß die Tragrollen 52, 58 und 60 aufgrund der Schrägstellung von deren Rollenachsen 66, 68 und 70 auf das Förderband mit einer Kraft K wirken, die das Förderband 12 entgegengesetzt zu der Richtung verschiebt, in welcher dieses aus der mittigen Position herausgelaufen ist, so daß die Längsmitte 30 sukzessive durch das schräg über die Tragrollen 52, 58 und 60 laufende Förderband 12 wieder in Richtung der mittigen Position zurückverschoben wird.

Der Winkel γ zwischen der Ebene 72 und der Symmetrieebene 28 wird bei Antrieb der Ausrichtrolle 88 verkleinert und das Förderband 12 liegt dadurch mit der Seitenkante 108 auf einem Bereich größeren Durchmesser der konischen Mantelfläche 98 auf, so daß sich die Ausrichtrolle 88 langsam dreht, der Generator langsamer angetrieben wird und somit auch eine langsamere Drehung des Drehgestells 50 mittels des Stellmotors 132 bewirkt.

Die Drehung des Drehgestells 50 und Verkleinerung des Winkels γ zwischen der Ebene 72 und der Symmetrieebene 28 erfolgt dabei so lange, bis die Ausrichtrolle 88 durch die Seitenkante 108 des Förderbands 12 nicht mehr angetrieben wird, wobei aufgrund der gegenüber der Ebene 72 entgegengesetzt zur Förderrichtung 82 versetzt in der Ebene 84 liegenden Rotationsachsen 92 und 94 der Ausrichtrollen 88 und 90 die Schwenkbewegung des Drehgestells 50 bewirkt, daß die Ausrichtrolle 88 sich von der Symmetrieebene 28 weg bewegt und dabei dem seitlich aus der mittigen Position herauslaufenden Förderband 12 ausweicht.

Dadurch, daß nun die Drehung des Drehgestells 50 und somit der Ebene 72, in welcher die Rollenachsen 66, 68 und 70 liegen, bereits dem seitlichen Herauslaufen des Förderbandes 12 entgegenwirkt und gleichzeitig die Ausrichtrolle 88 dem seitlich herauslaufenden Förderband aufgrund der Drehung ausweicht, wird eine maximale Drehstellung erreicht, in welcher das Förderband 12 nicht mehr seitlich weiter aus der mittigen Position herausläuft, und die Ausrichtrolle 88 aber soweit dem Förderband 12 ausgewichen ist, daß sie durch dessen Seitenkante 108 nicht mehr angetrieben wird, so daß die maximale Schwenkstellung des Drehgestells 50 und somit der Ebene 72 erreicht ist.

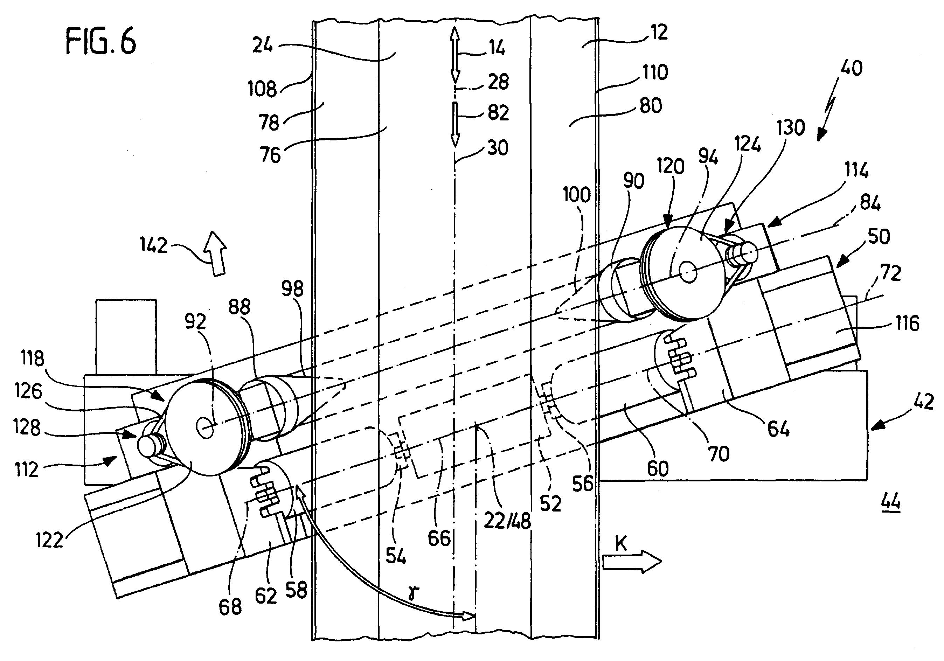

Ausgehend von dieser maximalen Schwenkstellung des Drehgestells 50 bewirkt die Schrägstellung der Ebene 72 und somit der Tragrollen 52, 58 und 60 nach wie vor, daß auf das Förderband 12 die Kraft K wirkt, welche bestrebt ist, dieses in die mittige Position zurückzubewegen. Bewegt sich nun das Förderband ausgehend von der maximalen Schwenkstellung in Richtung seiner mittigen Position zurück, so wird bei beginnendem seitlichem Zurücklaufen in der maximalen Schwenkstellung des Drehgestells 50 die Seitenkante 110 des Förderbandes 12 die Ausrichtrolle 90 antreiben, was dadurch möglich ist, daß durch das Verschwenken des Drehgestells 50 die Ausrichtrolle 90 dem Förderband 12, das heißt insbesondere dessen Seitenkante 110, in Richtung der Symmetrieebene 28 gefolgt ist. Beim Antreiben der Ausrichtrolle 90 - zunächst im Bereich der Mantelfläche 100 mit kleinem Durchmesser - wird über das Getriebe 120 der Generator 130 zunächst schnell angetrieben, welcher nun wiederum den Stellmotor 132 derart mit Strom speist, daß dieser beginnt, das Drehgestell 50 unter Vergrößerung des Winkels γ in Richtung des Pfeils 142 in seine Grundstellung zurückzudrehen (Fig. 6). In dem Maße, in dem das Förderband 12 sich seiner mittigen Position nähert, erfolgt ein Antreiben der Mantelfläche 100 im Bereich eines immer größer werdenden Durchmessers und somit ein langsameres Verschwenken des Drehgestells 50, so daß bei Erreichen der Grundstellung des Drehgestells 50, in welcher die Ebene 72 senkrecht zur Symmetrieebene 28 verläuft, auch das Förderband 12 wiederum seine mittige Position eingenommen hat, in welcher die Längsmitte 30 desselben in der Symmetrieebene 28 liegt.

Damit wird durch den erfindungsgemäßen Förderbandträger 40 ein seitliches Herauslaufen des Förderbandes 12 aus der mittigen Position selbsttätig korrigiert.

Gleiches gilt für das seitliche Herauslaufen des Förderbandes 12 in Richtung der Ausrichtrolle 90.

Bei der vorstehend beschriebenen Grundversion des vorstehend beschriebenen Ausführungsbeispiels wird davon ausgegangen, daß in der mittigen Position das Förderband 12 die beiden Ausrichtrollen 88 und 90 gerade noch nicht antreibt, jedoch unmittelbar nach Herauslaufen aus der mittigen Position beginnt, die eine oder andere Ausrichtrolle 88 oder 90 anzutreiben.

Bei einer Variante des ersten Ausführungsbeispiels können die Ausrichtrollen 88 und 90 aber auch so angeordnet sein, daß diese bereits in der mittigen Position des Förderbandes 12 durch die Seitenkanten 108 bzw. 110 desselben angetrieben werden. Durch die Verschaltung der Generatoren 128 und 130 zur Speisung des Stellmotors derart, daß diese den Stellmotor 132 in unterschiedliche Drehrichtungen drehen lassen, heben sich in diesem Fall die Speiseströme für den Stellmotor gerade auf, so daß der Stellmotor 132 die Grundstellung des Drehgestells 50 aufrechterhält, jedoch, sobald das Förderband 12 beginnt, geringfügig aus der mittigen Position herauszulaufen, ebenfalls beginnt, das Drehgestell 50 zu drehen, da die Seitenkante 108 oder 110, in Richtung welcher das Förderband 12 aus der mittigen Position herausläuft, die auf dieser Seite liegende Ausrichtrolle 88 bzw. 90 antreibt und die gegenüberliegende Ausrichtrolle nicht mehr, so daß der von dieser Ausrichtrolle 88 oder 90 angetriebene Generator 128 oder 130 den Strom erzeugt und somit den Stellmotor 132 in der vorstehend beschriebenen Art und Weise antreibt.

Im übrigen ist bei direkter Verwendung der Generatoren 128 und 130 eine Mindestdrehzahl dieser Generatoren erforderlich, ab welcher diese erst eine nennenswerte Leistung bringen, so daß die in der mittigen Position durch das Förderband 12 angetriebenen Ausrichtrollen 88 und 90 über die Getriebe 118, 120 so dimensioniert werden können, daß in der Grundstellung des Drehgestells 50 und mittige Position des Förderbandes 12 die beiden Generatoren 128 und 130 mit einer Drehzahl angetrieben werden, bei welcher sie noch keine nennenswerte Leistung liefern.

Bei einer weiteren Variante des ersten, vorstehend beschriebenen Ausführungsbeispiels sind anstelle der Generatoren 128 und 130 Drehzahlgeber 148 und 150 vorgesehen, welche jeweils ein Drehzahlsignal für eine Steuerung 152 erzeugen, die ihrerseits wieder den Stellmotor 132 ansteuert. Die Steuerung 152 kann dabei so ausgebildet sein, daß sie in linearer Abhängigkeit von dem Drehzahlsignal der Drehzahlgeber 148 und 150 den Stellmotor 132 antreibt. Es besteht aber auch die Möglichkeit, die Steuerung 152 so auszubilden, daß die von den jeweiligen Drehzahlgebern 148 und 150 erzeugten Signale über ein besonders gespeichertes Kennfeld mit dem zur Speisung des Stellmotors 132 vorgesehenen Strom verknüpft werden, so daß keine zwingende lineare Abhängigkeit bei der Verknüpfung dieser Größen eingehalten werden muß. Beispielsweise besteht bei Verwendung einer derartigen, mit einem abgespeicherten Kennlinienfeld arbeitenden Steuerung auch die Möglichkeit, das Kennlinienfeld variabel den jeweiligen Verhältnissen des Bandförderers, beispielsweise dem Abstand, in welchem die erfindungsgemäßen Förderbandträger 40 angeordnet sind, anzupassen und somit das Ansprechen des Stellmotors 132 und die Drehung des Drehgestells 50, insbesondere die Schwenkrate desselben, variabel anzupassen.

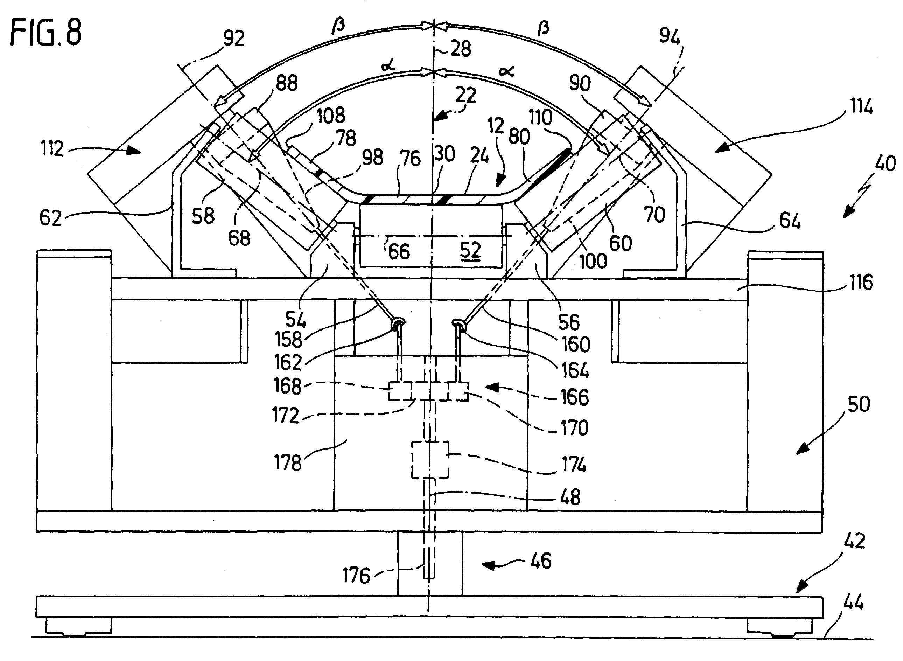

Bei einem zweiten Ausführungsbeispiel eines erfindungsgemäßen Förderbandträgers, dargestellt in Fig. 8, sind die Ausrichtrollen 88 und 90 sowie die Tragrollen 52, 58 und 60 in gleicher Weise an dem Drehgestell 50 angeordnet und gelagert, wie bei dem ersten Ausführungsbeispiel, so daß diesbezüglich vollinhaltlich auf das erste Ausführungsbeispiel Bezug genommen wird.

Allerdings treiben bei dem zweiten Ausführungsbeispiel gemäß Fig. 8 die Ausrichtrollen 88 und 90 über Antriebswellen 158 und 160 sowie Gelenke 162 und 164 direkt mechanisch ein mechanisches Getriebe 166 an, welches anstelle des Stellmotors 132 vorgesehen ist, und die Drehbewegung des Drehgestells 50 gegenüber dem Grundgestell 42 im Prinzip in gleicher Art und Weise wie bei den vorstehend beschriebenen Ausführungsbeispielen bewirkt, so daß die Funktion des Förderbandträgers dieselbe ist, wie bei den voranstehend beschriebenen Ausführungsbeispielen.

Beispielsweise umfaßt das mechanische Getriebe 166 zwei von den Wellen 158 bzw. 160 angetriebene Zahnräder 168 bzw. 170, die auf ein gemeinsames Zahnrad 172 arbeiten und je nach dem, welche der Ausrichtrollen 88 und 90 von dem Förderband 12 an getrieben ist, das Zahnrad 172 in entgegengesetzte Richtungen drehen, wobei das Zahnrad 172 noch ein Untersetzungsgetriebe 174 antreibt, dessen Abtriebswelle 176 in gleicher Weise wie die Motorwelle 136 fest mit dem Grundgestell 42 verbunden ist, während ein Getriebegehäuse 178 fest mit dem Drehgestell 50 verbunden ist. Damit sind die gleichen Funktionen wie beim ersten Ausführungsbeispiel erreichbar, mit dem einzigen Unterschied, daß die jeweils nicht vom Förderband 12 angetriebene Ausrichtrolle 88 oder 90 sich in entgegengesetzter Richtung dreht wie im Falle des Antriebs durch das Förderband 12, so daß die Ausrichtrollen 88 und 90 vorzugsweise so angeordnet werden müssen, daß diese in allen Schwenkstellungen und auch in der Grundstellung des Drehgestells 50 nicht gleichzeitig durch das Förderband 12 angetrieben werden, um Schlupf zwischen mindestens einer der Ausrichtrollen 88 oder 90 und dem Förderband 12 zu vermeiden.

Bei einem dritten Ausführungsbeispiel des erfindungsgemäßen Förderbandträgers, dargestellt in Fig. 9, sind das Drehgestell 50 sowie die Lagerung der Tragrollen 52, 58 und 60 sowie die Lagerung der Ausrichtrollen 88 und 90 in gleicher Weise ausgebildet wie beim ersten Ausführungsbeispiel.

Im Gegensatz zum ersten und zweiten Ausführungsbeispiel ist bei dem dritten Ausführungsbeispiel allerdings das Drehgestell 50 frei gegenüber dem Grundgestell 42 drehbar, wobei das Schwenklager somit lediglich die freie Drehbarkeit des Drehgestells 50 sicherstellt. Auch dieses Ausführungsbeispiel funktioniert prinzipiell genau wie im Zusammenhang mit dem ersten Ausführungsbeispiel beschrieben, wobei bei Herauslaufen des Förderbandes 12 aus der mittigen Position das Verschwenken des Drehgestells 50 dadurch bewirkt wird, daß das Förderband 12 mit der jeweiligen Seitenkante 108 oder 110 an der der entsprechenden Seite zugeordneten Ausrichtrolle 88 oder 90 zur Anlage kommt, und mit einer von der Symmetrieebene 28 weg gerichteten Kraft auf die jeweilige Ausrichtrolle 88 oder 90 wirkt, wobei sich die Kraft dadurch verstärkt, daß die jeweilige Ausrichtrolle 88 oder 90 - wie auch bei den vorstehenden Ausführungsbeispielen beschrieben - die konische Mantelfläche 98 bzw. 100 aufweist, so daß die Kraft um so stärker wird, um so mehr das Förderband 12 aus der mittigen Position herausläuft und mit seiner jeweiligen Seitenkante 108, 110 auf Bereich größeren Durchmessers der Mantelflächen 98, 100 wirkt.

Dadurch, daß die Ausrichtrollen 88 und 90 in der Ebene 84 angeordnet sind, die einen Abstand zur Drehachse 48 aufweist, und dadurch bei Verkleinerung des Winkels γ, wie in Fig. 5 dargestellt, beispielsweise die Ausrichtrolle 88 bei einem Verschwenken des Drehgestells 50 dem Förderband 12 ausweicht, bewirkt nun bei dem frei drehbaren Drehgestell die auf die Ausrichtrolle 88 wirkende Kraft ebenfalls, daß das auf diese Ausrichtrolle 88 wirkende Förderband 12 die Ausrichtrolle 88 zur Seite, also von der Symmetrieebene 28 weg, ausweichen läßt, so daß, wie im Zusammenhang mit Fig. 5 beschrieben, das Drehgestell 50 eine Drehbewegung durchführt, in welcher die Ebene 72 soweit gekippt ist, daß die in dieser liegenden

Rollenachsen 66, 68 und 70 der Tragrollen 52, 58 und 60 so stehen, daß sie mit der Kraft K auf das Förderband 12 wirken und dieses wieder in Richtung der mittigen Position zurückbewegen.

Das Drehgestell 50 wird auch bei freier Drehbarkeit gegenüber dem Grundgestell 42 so lange verdreht, bis die Seitenkante 108 nicht mehr auf die Ausrichtrolle 88 wirkt und somit das Förderband 12 über die Ausrichtrolle 88 kein Drehmoment mehr auf das Drehgestell 50 ausübt.

Sobald das Förderband 12 ausgehend von der maximalen Schwenkstellung, dargestellt in Fig. 5, beginnt, in Richtung seiner mittigen Position zurückzulaufen, beaufschlagt es die gegenüberliegende Ausrichtrolle 90, welche wiederum ein Moment auf das frei drehbare Drehgestell 50 ausübt und dieses in seine Grundstellung zurückdreht.

Bei einem vierten Ausführungsbeispiel, dargestellt in Fig. 10 umfaßt der Förderbandträger 40' das Grundgestell 42 sowie das als Ganzes mit 50' bezeichnete Drehgestell, welches in bekannter Weise über das Schwenklager 46 um die Drehachse 48 schwenkbar am Grundgestell 42 gelagert ist.

Im Gegensatz zu den ersten drei Ausführungsbeispielen sind am Drehgestell 50' lediglich die mittlere Tragrolle 52 und die beiderseits der mittleren Tragrolle 52 V-förmig zueinander angeordneten Tragrollen 58 und 60 in der bereits im Zusammenhang mit den ersten drei Ausführungsbeispielen beschriebenen Art und Weise gelagert.

Bezüglich der Ausbildung des Grundgestells und der Ausbildung des Drehgestells 50' insoweit als die Anordnung und Lagerung der Tragrollen 52, 58 und 60 betroffen ist, wird vollinhaltlich auf die detaillierten Ausführungen zum ersten Ausführungsbeispiel Bezug genommen.

Im Gegensatz zum ersten Ausführungsbeispiel sind allerdings beim vierten Ausführungsbeispiel die Ausrichtrollen 88 und 90 nicht auf dem Drehgestell 50' angeordnet, sondern auf einem separaten stationären Gestell 180, welches sich auf der Bodenfläche 44 unbeweglich abstützt.

An dem Gestell 180 sind auch die Lagerträger 112 und 114 für die Ausrichtrollen 88 und 90 vorgesehen, sowie die Generatoren 128 und 130. Hinsichtlich der Lagerung der Ausrichtrollen 88 und 90 sowie der Generatoren 128 und 130 wird vollinhaltlich auf die Ausführungen zum ersten Ausführungsbeispiel Bezug genommen.

Die Generatoren 128 und 130 sind in gleicher Weise wie beim ersten Ausführungsbeispiel beschrieben verschaltet, daß sie den Stellmotor 132 speisen, welcher zu einer Verschwenkung des Drehgestells 50' führt.

Dabei wird in gleicher Weise, wie im Zusammenhang mit dem ersten Ausführungsbeispiel beschrieben, bei einem seitlichen herauslaufen des Förderbands 12 aus seiner mittigen Position die jeweils auf dieser Seite liegende Ausrichtrolle 88 oder 90 angetrieben, die dann über den Stellmotor 132 das Drehgestell 50' in der bereits beschriebenen Weise verschwenkt. Allerdings erfolgt ein Antrieb der jeweiligen Ausrichtrolle 88 oder 90 so lange, so lange das Förderband 12 in Richtung der jeweiligen Ausrichtrolle 88 oder 90 aus der mittigen Position herausgelaufen ist und ein Zurückschwenken des Drehgestells 50' mittels des Stellmotors durch die entgegengesetzte Ausrichtrolle 90 bis 88 erfolgt erst dann, wenn das Drehgestell 50 das Förderband 12 dazu gebracht hat, in die entgegengesetzte Richtung aus der mittigen Position herauszulaufen.

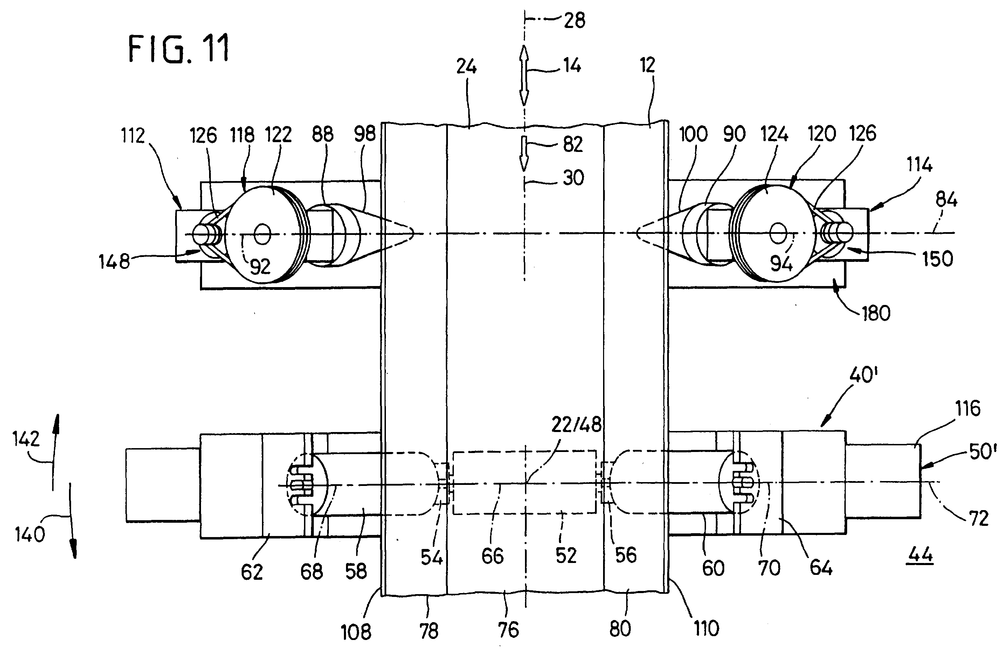

Aus diesem Grund ist es bei dem vierten Ausführungsbeispiel vorteilhaft, wenn anstelle der Generatoren 128 bzw. 130 in gleicher Weise wie bei der Variante des ersten Ausführungsbeispiels, Drehzahlgeber 148 und 150 vorgesehen sind (Fig. 11), welche ein Drehzahlsignal für die Steuerung 152 erzeugen, die ihrerseits dann wieder den Stellmotor ansteuert.

In der Steuerung 152 kann dabei über ein gespeichertes Kennfeld mit der jeweiligen Drehzahl des jeweiligen Drehzahlgebers ein Strom für den Stellmotor verknüpft und ein maximales Verschwenken des Drehgestells 50' sowie eine Steuerungshysterese vorgegeben werden, um ein Aufschaukeln eines Herauslaufens des Förderbandes 12 in jeweils entgegengesetzte Richtungen aus der mittigen Position zu verhindern.

Insbesondere kann die konische Form der Ausrichtrollen 88 und 90 dazu eingesetzt werden, zu erkennen, wie weit die jeweilige Seitenkante 108 oder 110 aus der Mitte herausgelaufen ist, da das Anliegen der Seitenkante in unterschiedlicher Höhe des Konus zu unterschiedlichen Drehzahlen der jeweiligen Ausrichtrolle 88 bzw. 90 führt, so daß auch dann, wenn nur die eine Ausrichtrolle 88 oder 90 vom Förderband 12 angetrieben ist, für die Steuerung erkennbar ist, ob sich die Seitenkante 108 oder 110 des Förderbands 12 noch aus der mittigen Position heraus oder wieder auf die mittige Position zubewegt, so daß über ein Kennlinienfeld bereits dann, wenn sich die jeweilige Seitenkante 108 oder 110 wieder zur mittigen Position hinbewegt, ein Zurückschwenken des Drehgestells 50' in der Richtung 142 eingeleitet werden kann, so daß ein Überschwingen, d.h. ein Herauslaufen aus der mittigen Position in entgegengesetzter Richtung weitgehend vermieden werden kann.

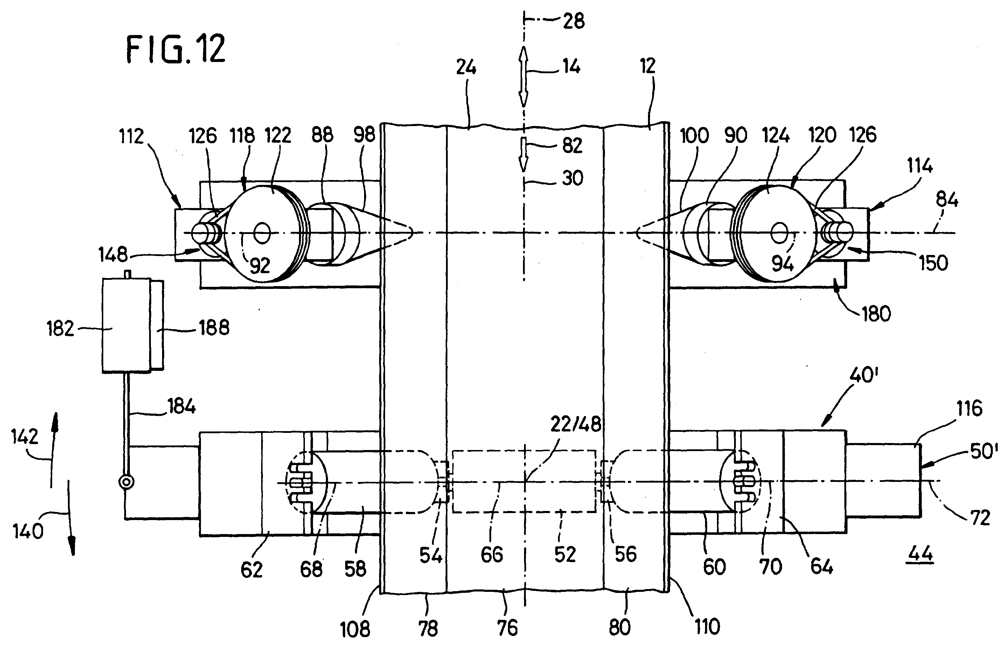

Bei einer zweiten Variante des vierten Ausführungsbeispiels ist anstelle des Stellmotors 132, wie in Fig. 12 dargestellt, ein Schubstangenantrieb 182 vorgesehen, welcher mittels einer Schubstange 184 über ein Gelenk 186 an dem Basisträger 116 angreift, um das Drehgestell 50' um die Drehachse 48 zu verschwenken. Dabei ist der Schubstangenantrieb 182 an einem stationär auf der Bodenfläche 44 angeordneten Antriebsträger 188 gelagert.

Im übrigen wird hinsichtlich der übrigen unveränderten Merkmale auf die voranstehenden Ausführungen zum vierten Ausführungsbeispiel verwiesen.

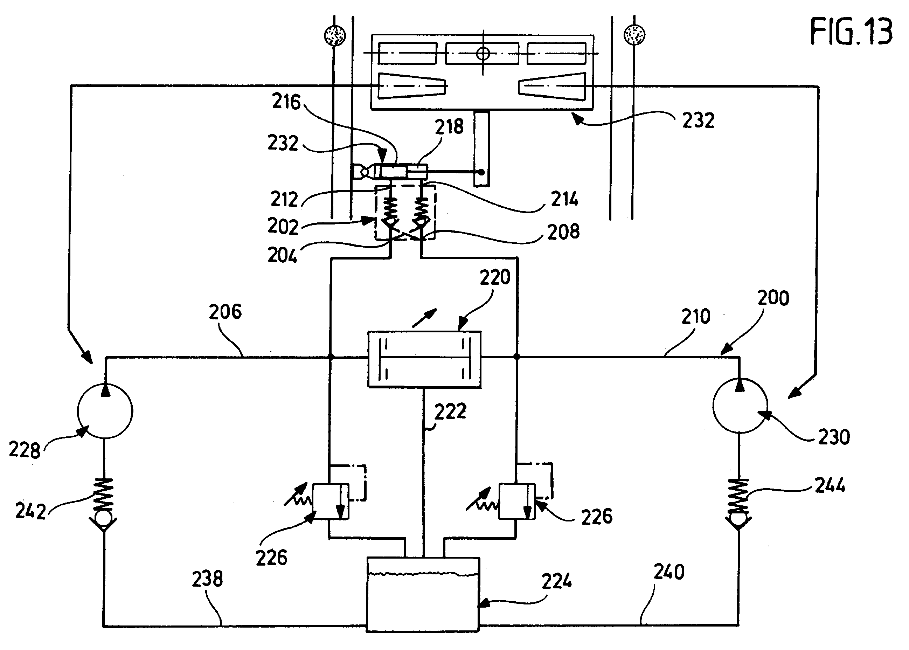

Bei einem fünften Ausführungsbeispiel, dargestellt in Fig. 13, ist das Drehgestell 50 in gleicher Weise ausgebildet, wie im Zusammenhang mit dem ersten Ausführungsbeispiel beschrieben, mit dem Unterschied, daß anstelle der Generatoren 128 und 130 durch die Ausrichtrollen 88 und 90 getriebene Hydraulikpumpen 228 bzw. 230 vorgesehen sind.

Die Teil eines Hydrauliksystems 200 bildenden Hydraulikpumpen 228 und 230 fördern bei Antrieb der jeweiligen Ausrichtrolle 88 oder 90 ein Hydraulikmedium, mit welchem ein hydraulisches Stellglied 232, beispielsweise ein Hydraulikzylinder, betätigbar ist, welcher dann seinerseits das Drehgestell 50 relativ zum Grundgestell 42 verdreht.

Das in Fig. 13 dargestellte Hydrauliksystem umfaßt neben den Hydraulikpumpen 228 und 230 eine von der Hydraulikpumpe 228 zu einem ersten Anschluß 204 eines doppeltentsperrbaren Rückschlagventils führende erste Druckleitung 206 sowie eine zu einem zweiten Druckanschluß 208 führende zweite Druckleitung 210. Das doppeltentsperrbare Rückschlagventil 202 weist ferner einen ersten Ausgang 212 und einen zweiten Ausgang 214 auf, die mit einer ersten Druckkammer 216 bzw. einer zweiten Druckkammer 218 des Hydraulikzylinders 232 verbunden sind.

Das doppeltentsperrbare Rückschlagventil 202 arbeitet nun so, daß dann, wenn an keinem der Eingänge 204 und 208 ein Druck anliegt, ein Rückfluß von den Ausgängen 212 und 214 zu dem jeweiligen Eingang 204 bzw. 208 verhindert wird, so daß auch kein Hydraulikmedium aus den Zylinderkammern 214 oder 218 ausfließen kann und somit der Hydraulikzylinder 232 bei drucklosen Eingängen 204 und 208 des doppeltentsperrbaren Rückschlagventils 202 in der Stellung stehen bleibt, in welche er zuletzt durch einen Druck an einem der Eingänge 204 oder 208 des doppeltentsperrbaren Rückschlagventils 202 gebracht wurde.

Sobald an einem der Eingänge 204 oder 208 ein Druck entweder durch die angetriebene Hydraulikpumpe 228 oder 230 vorliegt, wird sowohl die Verbindung zwischen dem ersten Eingang 204 und dem ersten Ausgang 212 sowie zwischen dem zweiten Eingang 208 und dem zweiten Ausgang 214 freigegeben, so daß Hydraulikmedium in eine der Zylinderkammern 216 oder 218 einströmen und aus der anderen Zylinderkammer 218 bzw. 216 abströmen kann.

Je nach dem, welche der Hydraulikpumpen 228 oder 230 angetrieben ist, erfolgt somit über die Druckleitungen 206 oder 210 eine Beaufschlagung des doppeltentsperrbaren Rückschlagventils 202 und somit eine Verstellung des Hydraulikzylinders 232.

Um sicherzustellen, daß jeweils nur eine der Hydraulikpumpen 228 oder 230 auf das doppeltentsperrbare Rückschlagventil 202 wirkt, ist zwischen die beiden Druckleitungen 206 und 212 ein als Ganzes mit 220 bezeichnetes Zwei-Druckventil geschaltet, welches über eine Rückleitung 222 mit einem Hydrauliktank 224 verbunden ist und jeweils diejenige der Druckleitungen 206 oder 210 über die Rückleitung 222 mit dem Hydrauliktank 224 verbindet, in welcher der niedrigere Druck vorliegt, während die jeweils andere der Druckleitungen 210 bzw. 206 unbeeinflußt bleibt.

Um ferner einen Maximaldruck in den beiden Druckleitungen 206 oder 210 festzulegen, ist jede dieser Druckleitungen jeweils über einen Druckbegrenzer 226 mit dem Hydrauliktank 224 verbunden.

Ferner saugt jede der Hydraulikpumpen 228 oder 230 über eine Saugleitung 238 bzw. 240 und ein darin angeordnetes Rückschlagventil 242 bzw. 244 Hydraulikmedium aus dem Hydrauliktank 224 an.

Durch die in Fig. 13 dargestellte Lösung gemäß dem fünften Ausführungsbeispiel ist es somit möglich, die gleichen Funktionen, die im Zusammenhang mit dem ersten Ausführungsbeispiel ausführlich beschrieben wurden, auch über das Hydrauliksystem 200 mittels der Hydraulikpumpen 228 und 230 und dem Hydraulikzylinder 232 zu realisieren.

Hinsichtlich sämtlicher Funktionen des fünften Ausführungsbeispiels wird daher vollinhaltlich auf die Ausführungen zum ersten Ausführungsbeispiel Bezug genommen.

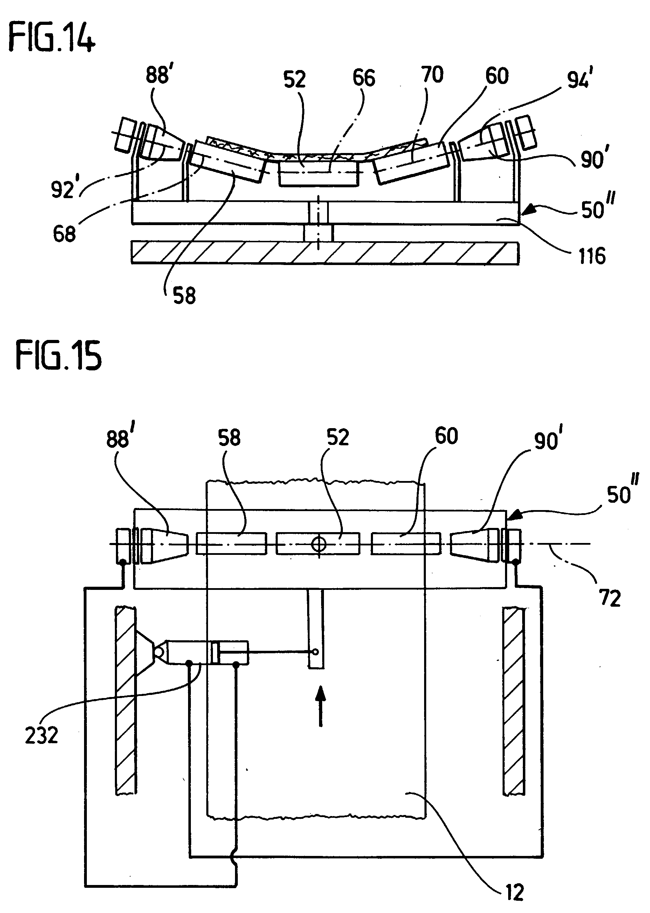

Bei einem sechsten Ausführungsbeispiel, dargestellt in Fig. 14 und Fig. 15, ist das Drehgestell 50'' hinsichtlich der Anordnung der Tragrollen 52, 58 und 60 identisch ausgebildet wie das erste Ausführungsbeispiel.

Im Gegensatz zum ersten Ausführungsbeispiel liegen die Ausrichtrollen 88' und 90' nicht in einer zur Ebene 72 der Tragrollen 52, 58, 60 parallelen Ebene 84, sondern in der Ebene 72 und zwar so, daß deren Rotationsachsen 92' und 94' vorzugsweise mit den Rollenachsen 68 bzw. 70 fluchten oder noch stärker als diese gegenüber der Horizontalen geneigt sind.

Jede der Ausrichtrollen 88' und 90' treibt ihrerseits eine Hydraulikpumpe 228' bzw. 230' eines als Ganzes mit 200' bezeichneten Hydrauliksystems, das im Grunde identisch aufgebaut ist wie das Hydrauliksystem 200, mit dem Unterschied, daß die Hydraulikpumpen 228' bzw. 230' in zueinander entgegengesetzten Drehrichtungen antreibbar sind und das Hydrauliksystem 200' unabhängig von der Laufrichtung des Förderbandes 12 funktioniert.

Um die Funktion des Hydrauliksystems unabhängig von der Antriebsdrehrichtung der Förderpumpen 228' und 230' sicherzustellen, zweigt bei Hydrauliksystem 200' zwischen dem Rückschlagventil 244 und der Hydraulikpumpe 230' eine erste Querleitung 246 von der zweiten Saugleitung 240 ab, welche in die erste Druckleitung 206 einmündet.

In gleicher Weise zweigt von der ersten Saugleitung 238 zwischen dem Rückschlagventil 242 und der Hydraulikpumpe 228' eine zweite Querleitung 248 ab, welche in der zweite Druckleitung 210 einmündet.

Wird nun eine der Pumpen 228' oder 230' in umgekehrter Richtung angetrieben, das heißt so, daß diese Hydraulikmedium in ihre Saugleitung 238 oder 240 fördert, so führt die jeweilige Querleitung 248 bzw. 246 dazu, daß ein Druck in der Druckleitung 210 bzw. 206 der jeweils anderen Hydraulikpumpe 230' bzw. 228' aufgebaut wird, während über die jeweils andere Querleitung 246 bzw. 248 aus der Saugleitung 240 bzw. 238 der jeweils anderen Hydraulikpumpe 230' bzw. 228' über das jeweilige Rückschlagventil 244 bzw. 242 Hydraulikmedium angesaugt wird.

Dies führt in dem Fall der umgekehrten Antriebsrichtung beispielsweise der Hydraulikpumpe 228' dazu, daß an dem Eingang 214 des doppeltentsperrbaren Rückschlagventils 202 ein Druck anliegt oder bei Antrieb der Hydraulikpumpe 230' in umgekehrter Richtung ein Druck am Eingang 212.

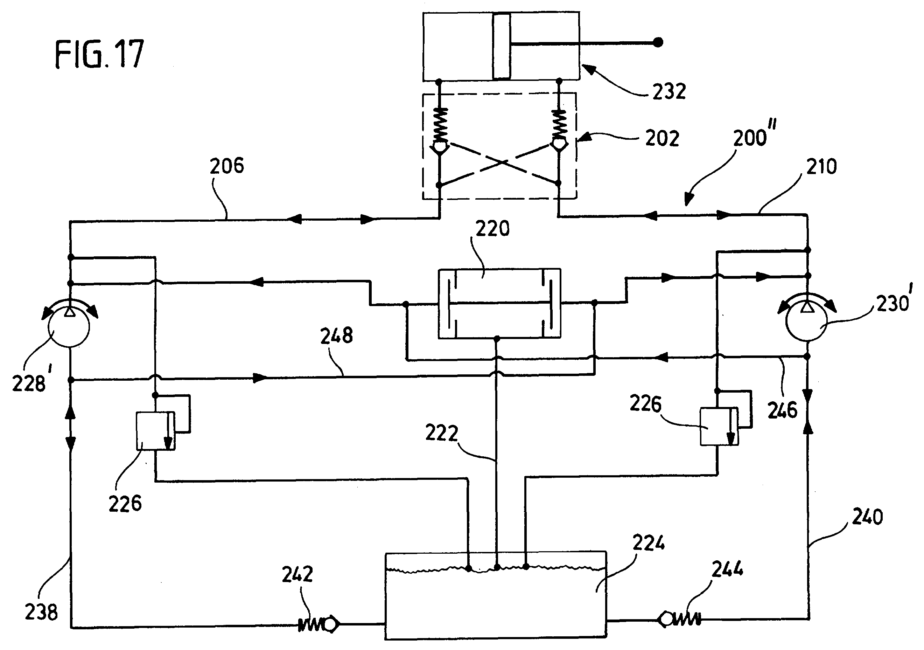

Zusätzlich kann das Hydrauliksystem 200', wie in Fig. 17 dargestellt, noch mit einem zwischen die Druckleitungen 206 und 210 geschalteten Zwei-Druckventil 220 versehen sein, wie in Fig. 17 im Hydrauliksystem 200'' dargestellt, wobei das Zwei-Druckventil 220 in gleicher Weise funktioniert, wie im Zusammenhang mit dem fünften Ausführungsbeispiel im Hydrauliksystem 200 beschrieben (Fig. 13).

Im übrigen ist das Hydrauliksystem 200'', dargestellt in Fig. 17, in gleicher Weise ausgebildet, wie das Hydrauliksystem 200' und ebenfalls auch bei Umkehrung der Antriebsrichtung der Hydraulikpumpen 228' und 230' funktionsfähig.

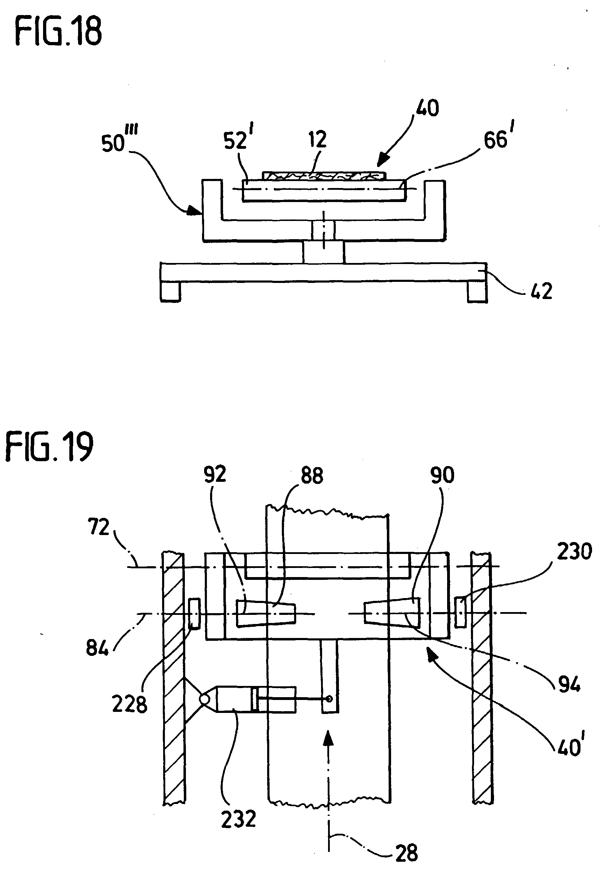

Die ersten sechs Ausführungsbeispiele eines erfindungsgemäßen Förderbandträgers 40 betreffen vornehmlich die Führung eines Obergurts des Förderbandes 12. Ein siebtes, in Fig. 18 und 19 dargestelltes Ausführungsbeispiel eines erfindungsgemäßen Förderbandträgers 40' hat die Führung eines Untergurts des Förderbandes zum Gegenstand.

Da der Untergurt des Förderbandes 12 keine Lasten und insbesondere keine losen Güter befördert, ist es ausreichend, den Untergurt des Förderbandes 12 auf einer einzigen Tragrolle, nämlich der mittleren Tragrolle 52', zu führen, wobei sich die mittlere Tragrolle 52' um eine im wesentlichen horizontal verlaufende Rollenachse 66' dreht und sich längs ihrer Achse 66' über die ganze Breite des Untergurts des Förderbandes 12 erstreckt.

Die Ausrichtrollen 88 und 90 sind mit ihren Rotationsachsen 92 und 94 in der Ebene 84 angeordnet, die parallel zur Ebene 72 liegt, in welcher sich die Rollenachse 66' erstreckt.

Die Rotationsachsen 92 und 94 können in diesem Fall in gleicher Weise geneigt sein, wie beim ersten Ausführungsbeispiel oder parallel zur Rollenachse 66' verlaufen.

Sowohl die Ausrichtrollen 88 und 90 als auch die mittlere Tragrolle 52' sind gemeinsam auf einem Drehgestell 50 ''' angeordnet, das im Prinzip, in gleicher Weise wie beim ersten Ausführungsbeispiel beschrieben, auf einem Grundgestell 42 wie beim ersten Ausführungsbeispiel angeordnet ist. Hinsichtlich der Anordnung des Drehgestells 50 auf dem Grundgestell 42 sowie der gesamten Funktion durch die Drehbewegung des Drehgestells 50''' gegenüber dem Grundgestell 42 wird vollinhaltlich auf die Ausführungen zum ersten Ausführungsbeispiel Bezug genommen.

Die Drehbewegung des Drehgestells 50''' wird wie in Fig. 19 exemplarisch dargestellt, durch einen Hydraulikzylinder 232 bewirkt, wobei dieser Teil eines im Zusammenhang mit dem fünften Ausführungsbeispiel ausführlich beschriebenen Hydrauliksystems 200 ist, welches Hydraulikpumpen 228 und 230 umfaßt, die jeweils durch die Ausrichtrollen 88 und 90 antreibbar sind. Hinsichtlich der Ausbildung des Hydrauliksystems 200 zum Antrieb des Hydraulikzylinders 232 wird vollinhaltlich auf das fünfte Ausführungsbeispiel Bezug genommen.

Bei einer weiteren Modifikation des siebten Ausführungsbeispiels, dargestellt in Fig. 18 und 19, ist es ebenfalls möglich, die Ausrichtrollen 88 und 90 ebenfalls in die Ebene 72 zu verlagern und das Hydrauliksystem 200 entsprechend dem Hydrauliksystem 200' oder 200'' zu modifizieren, so daß auch für unterschiedliche Laufrichtungen des Untergurts die im Zusammenhang mit dem ersten Ausführungsbeispiel beschriebenen Funktionen zur Führung des Untergurts symmetrisch zur Symmetriebenene 28 realisierbar sind.

## Patentansprüche

1. Förderbandträger für Bandförderer, umfassend ein Gestell (42, 50), welches ein Grundgestell (42) und ein um eine Drehachse (48) gegenüber dem Grundgestell (42) schwenkbares Drehgestell (50, 50') umfaßt, mindestens eine an dem Drehgestell (50, 50') angeordnete Tragrolle (52, 58, 60) für ein Förderband des Bandförderers, welche sich mit ihrer Rollenachse quer zu einer Längsrichtung des Förderbands erstreckt und auf welcher das Förderband mit einer Unterseite aufliegt, zusätzlich zu der Tragrolle (52, 58, 60) vorgesehene Ausrichtrollen (88, 90) zum Halten des Förderbandes (12) in einer mittigen Position des Bandförderers, welche so angeordnet sind, daß das auf der Tragrolle (52, 58, 60) laufende Förderband (12) bei dem seitlichen Herauslaufen aus der mittigen Position auf mindestens eine der Ausrichtrollen (88, 90) einwirkt und dabei das Drehgestell (50, 50') mit der Tragrolle (52, 58, 60) in eine Drehstellung verschwenkt, in welcher die Tragrolle (52, 58, 60) das Förderband (12) in Richtung seiner mittigen Position führt, dadurch gekennzeichnet, daß mit jeder Ausrichtrolle (88, 90) ein elektrisches, von deren Drehzahl abhängiges Signal erzeugbar ist und daß ein Schwenken des Drehgestells (50, 50') gegenüber dem Grundgestell (42) über einen Stellantrieb (132, 182) entsprechend den von den Ausrichtrollen erzeugten drehzahlabhängigen Signalen erfolgt.

2. Förderbandträger nach Anspruch 1, dadurch gekennzeichnet, daß jede Ausrichtrolle (88, 90) einen Generator (128, 130) antreibt, welcher einen Speisestrom für den das Drehgestell (50, 50') drehenden Stellantrieb (132, 182) erzeugt.

3. Förderbandträger nach Anspruch 1, dadurch gekennzeichnet, daß jede Ausrichtrolle (88, 90) einen Sensor (148, 150) treibt, welcher ein drehzahlabhängiges Signal für eine Steuerung (152) für den Stellantrieb (132, 182) liefert.

4. Förderbandträger für Bandförderer, umfassend ein Gestell, welches ein Grundgestell (42) und ein um eine Drehachse (48) gegenüber dem Grundgestell (42) schwenkbares Drehgestell (50, 50') umfaßt, mindestens eine an dem Drehgestell (50, 50') angeordnete Tragrolle (52, 58, 60) für ein Förderband des Bandförderers, welche sich mit ihrer Rollenachse quer zu einer Längsrichtung des Förderbands erstreckt und auf welcher das Förderband mit einer Unterseite aufliegt, zusätzlich zu der Tragrolle (52, 58, 60) vorgesehene Ausrichtrollen (88, 90) zum Halten des Förderbandes (12) in einer mittigen Position des Bandförderers, welche so angeordnet sind, daß das auf der Tragrolle (52, 58, 60) laufende Förderband (12) bei dem seitlichen Herauslaufen aus der mittigen Position auf mindestens eine der Ausrichtrollen (88, 90) einwirkt und dabei das Drehgestell (50, 50') mit der Tragrolle (52, 58, 60) in eine Drehstellung verschwenkt, in welcher die Tragrolle (52, 58, 60) das Förderband (12) in Richtung seiner mittigen Position führt, ein Hydrauliksystem (200), welches einen das Drehgestell (50, 50') gegenüber dem Grundgestell (42) verschwenkenden Hydraulikantrieb (232) und eine jeder der Ausrichtrollen (88, 90) zugeordnete Hyraulikpumpe (228, 230) umfaßt, dadurch gekennzeichnet, daß jede der Hydraulikpumpen (228, 230) über eine dieser zugeordnete Saugleitung (238, 240) Hydraulikmedium aus einem Hydrauliktank (224) ansaugt, daß eine der Hydraulikpumpen (228, 230) eine der zum Hydraulikantrieb (232) führenden Druckleitungen (206, 210) speist und daß die andere Hydraulikpumpe (230, 228) die andere der zum Hydraulikantrieb (232) führenden Druckleitungen (206, 210) speist, und daß das Hydrauliksystem (200) ein zwischen den zwei zum Hydraulikantrieb (232) führenden Druckleitungen (206, 210) liegendes Zwei-Druckventil (220) umfaßt, welches die Druckleitung (206, 210) mit dem niedrigeren Druck über eine Rückleitung (222) mit dem Hydrauliktank (224) verbindet.

5. Förderbandträger nach Anspruch 4, dadurch gekennzeichnet, daß die Hydraulikpumpen (228', 230') beim Antrieb in zwei einander entgegengesetzten Drehrichtungen funktionsfähig sind.

6. Förderbandträger nach Anspruch 4, oder 5, dadurch gekennzeichnet, daß das Hydrauliksystem (200) ein dem Hydraulikantrieb (232) vorgeschaltetes doppelentsperrbares Rückschlagventil (202) umfaßt.

7. Förderbandträger nach einem der voranstehenden Ansprüche, dadurch gekennzeichnet, daß die Ausrichtrollen (88, 90) mit ihren Rotationsachsen (92, 94) V-förmig zueinander angeordnet sind.

8. Förderbandträger nach Anspruch 7, dadurch gekennzeichnet, daß die Ausrichtrollen (88, 90) mit ihren Rotationsachsen (92, 94) einen kleineren Winkel zwischen sich einschließen als seitliche Bereiche der durch die Tragrolle (52, 58, 60) definierten Auflagefläche, auf welcher das Förderband (12) in mittiger Position aufliegt.

9. Förderbandträger nach einem der voranstehenden Ansprüche, dadurch gekennzeichnet, daß die Ausrichtrollen (88', 90') mit ihren Rotationsachsen (92, 94) gemeinsam mit der Rollenachse (66, 68, 70) der Tragrolle (52, 58, 60) in einer Ebene (72) liegen.

10. Förderbandträger nach Anspruch 9, dadurch gekennzeichnet, daß die Ausrichtrollen (88', 90') beiderseits der Tragrolle oder der Tragrollen (52, 58, 60) angeordnet sind.

11. Förderbandträger nach Anspruch 10, dadurch gekennzeichnet, daß die Ausrichtrollen (88', 90') in Anschluß an äußere Enden der Tragrolle oder der Tragrollen (52, 58, 60) angeordnet sind.

12. Förderbandträger nach einem der vorstehenden Ansprüche, dadurch gekennzeichnet, daß die Ausrichtrollen (88, 90) mit ihren Rotationsachsen (92, 94) in einer Ebene (84) angeordnet sind, welche zur Ebene (72) der Rollenachse (66, 68, 70) der Tragrolle (52, 58, 60) im Abstand angeordnet ist.

13. Förderbandträger nach einem der voranstehenden Ansprüche, dadurch gekennzeichnet, daß die Ausrichtrollen (88, 90) in Förderrichtung (82) gesehen, vor der Tragrolle (52, 58, 60) angeordnet sind.

14. Förderbandträger nach einem der voranstehenden Ansprüche, dadurch gekennzeichnet, daß die Ausrichtrollen (88, 90) quer zur Förderrichtung (82) auf das Förderband (12) zu-oder von diesem wegbewegbar angeordnet sind.

15. Förderbandträger nach Anspruch 14, dadurch gekennzeichnet, daß mit dem Schwenken des Drehgestells (50) in eine das Förderband (12) in die mittige Position zurückführende Schwenkstellung eine Bewegung der beim Herauslaufen des Förderbands (12) aus der mittigen Stellung angetriebenen Ausrichtrolle (88) quer zur Förderrichtung (82) in Richtung vom Förderband (12) weg erfolgt.

16. Förderbandträger nach Anspruch 15, dadurch gekennzeichnet, daß in der maximalen Schwenkstellung des Drehgestells (50) die zunächst beim Herauslaufen des Förderbandes (12) aus der mittigen Position angetriebene Ausrichtrolle (88) nicht mehr vom Förderband (12) beaufschlagt wird.

17. Förderbandträger nach einem der Ansprüche 13 bis 16, dadurch gekennzeichnet, daß beim Schwenken des Drehgestells (50) in eine das Förderband (12) in die mittige Position zurückführende Schwenkstellung eine Bewegung der der Seite des Herauslaufens des Förderbandes gegenüberliegenden Ausrichtrolle (90) quer zur Förderrichtung (82) in Richtung auf das Förderband (12) zu erfolgt.

18. Förderbandträger nach Anspruch 17, dadurch gekennzeichnet, daß die der Seite des Herauslaufens des Förderbandes (12) aus der mittigen Position gegenüberliegende Ausrichtrolle (90) so weit quer zur Förderrichtung (82) bewegbar ist, daß diese in der maximalen Schwenkstellung des Drehgestells (50) vom Förderband angetrieben ist.

19. Förderbandträger nach Anspruch 17 oder 18, dadurch gekennzeichnet, daß die der Seite des Herauslaufens aus der mittigen Position gegenüberliegende Ausrichtrolle (90) beim Zurückschwenken des Drehgestells (50) in die Grundstellung solange angetrieben ist, bis das Drehgestell (50) die Grundstellung erreicht hat.

20. Förderbandträger nach einem der voranstehenden Ansprüche, dadurch gekennzeichnet, daß in der Grundstellung des Drehgestells (50) und mittiger Position des Förderbands (12) dieses keine der Ausrichtrollen (88, 90) antreibt.

21. Förderbandträger nach einem der voranstehenden Ansprüche, dadurch gekennzeichnet, daß die Ausrichtrollen (88, 90) gesteuert durch die Schwenkbewegung des Drehgestells (50) quer zur Förderrichtung (82) bewegbar sind.

22. Förderbandträger nach einem der voranstehenden Ansprüche, dadurch gekennzeichnet, daß beide Ausrichtrollen (88, 90) quer zur Förderrichtung (82) gemeinsam bewegbar sind.

23. Förderbandträger nach den voranstehenden Ansprüchen, dadurch gekennzeichnet, daß beide Ausrichtrollen (88, 90) an dem Drehgestell (50) angeordnet sind.

24. Förderbandträger nach einem der Ansprüche 1 bis 23, dadurch gekennzeichnet, daß die Ausrichtrollen (88, 90) relativ zum Grundgestell (42) stationär angeordnet sind.

25. Förderbandträger nach einem der voranstehenden Ansprüche 14 bis 24, dadurch gekennzeichnet, daß die Ausrichtrollen (88, 90) mit ihren Rotationsachsen (92, 94) in einer Ebene (84) liegen, welche im Abstand von der Drehachse (48) angeordnet ist.

26. Förderbandträger nach Anspruch 25, dadurch gekennzeichnet, daß die Ebene (84) parallel zur Drehachse (48) verläuft.

27. Bandförderer umfassend in Längsrichtung eines Förderbandes (12) aufeinander angeordnete Förderbandträger mit einem Grundgestell und mit starr gegenüber dem Grundgestell angeordnete Rollenachsen aufweisenden Tragrollen, dadurch gekennzeichnet, daß nach fünf bis fünfzig Förderbandträgern (16) mit starr gegenüber dem Grundgestell (42) angeordneten Rollenachsen ein Förderbandträger (40, 40') gemäß einem der Ansprüche 1 bis 26 vorgesehen ist.

28. Bandförderer nach Anspruch 27, dadurch gekennzeichnet, daß ein Förderbandträger (40, 40') gemäß den Ansprüchen 1 bis 26 nach ungefähr 10 bis ungefähr 30 konventionellen Förderbandträgern (16) mit starr gegenüber dem Grundgestell (42) angeordneten Rollenachsen angeordnet ist.

## Claims

1. Conveyor belt support for belt conveyors, comprising a frame (42, 50) having a base frame (42) and a rotary frame (50, 50') pivotable about an axis of rotation (48) in relation to the base frame (42), at least one support roller (52, 58, 60) for a conveyor belt of the belt conveyor, said roller being arranged on the rotary frame (50, 50') and extending with its roller axis transversely to a longitudinal direction of the conveyor belt, and the conveyor belt resting on said roller with an underside, alignment rollers (88, 90) provided in addition to the support roller (52, 58, 60) for holding the conveyor belt (12) in a central position of the belt conveyor, said alignment rollers being arranged such that the conveyor belt (12) running on the support roller (52, 58, 60) acts on at least one of the alignment rollers (88, 90) when shifting sideways out of the central position and thus pivots the rotary frame (50, 50') with the support roller (52, 58, 60) into a rotary position, in which the support roller (52, 58, 60) guides the conveyor belt (12) in the direction of its central position, characterized in that with each alignment roller (88, 90) an electric signal dependent on its rotational speed is generatable, and in that a pivoting of the rotary frame (50, 50') in relation to the base frame (42) is brought about via an adjusting drive (132, 182) in accordance with the signals generated in dependence upon the rotational speed by the alignment rollers.

2. Conveyor belt support as defined in claim 1, characterized in that each alignment roller (88, 90) drives a generator (128, 130) which generates a supply current for the adjusting drive (132, 182) turning the rotary frame (50, 50').

3. Conveyor belt support as defined in claim 1, characterized in that each alignment roller (88, 90) drives a sensor (148, 150) which supplies a signal dependent on rotational speed for a control means (152) for the adjusting drive (132, 182).

4. Conveyor belt support for belt conveyors, comprising a frame having a base frame (42) and a rotary frame (50, 50') pivotable about an axis of rotation (48) in relation to the base frame (42), at least one support roller (52, 58, 60) for a conveyor belt of the belt conveyor, said roller being arranged on the rotary frame (50, 50') and extending with its roller axis transversely to a longitudinal direction of the conveyor belt, and the conveyor belt resting on said roller with an underside, alignment rollers (88, 90) provided in addition to the support roller (52, 58, 60) for holding the conveyor belt (12) in a central position of the belt conveyor, said alignment rollers being arranged such that the conveyor belt (12) running on the support roller (52, 58, 60) acts on at least one of the alignment rollers (88, 90) when shifting sideways out of the central position and thus pivots the rotary frame (50, 50') with the support roller (52, 58, 60) into a rotary position, in which the support roller (52, 58, 60) guides the conveyor belt (12) in the direction of its central position, a hydraulic system (200) comprising a hydraulic drive (232) pivoting the rotary frame (50, 50') in relation to the base frame (42), and a hydraulic pump (228, 230) associated with each of the alignment rollers (88, 90), characterized in that each of the hydraulic pumps (228, 230) draws in hydraulic medium from a hydraulic tank (224) via a suction line (238, 240) associated therewith, in that one of the hydraulic pumps (228, 230) supplies one of the pressure lines (206, 210) leading to the hydraulic drive (232), and in that the other hydraulic pump (230, 228) supplies the other one of the pressure lines (206, 210) leading to the hydraulic drive (232), and in that the hydraulic system (200) comprises a two-pressure valve (220) located between the two pressure lines (206, 210) leading to the hydraulic drive (232), said valve connecting the pressure line (206, 210) with the lower pressure to the hydraulic tank (224) via a return line (222).

5. Conveyor belt support as defined in claim 4, characterized in that the hydraulic pumps (228', 230') are functional during driving in two directions of rotation opposite to one another.

6. Conveyor belt support as defined in claim 4 or 5, characterized in that the hydraulic system (200) comprises a pilot controlled double check valve (202) connected to the input of the hydraulic drive (232).

7. Conveyor belt support as defined in any one of the preceding claims, characterized in that the alignment rollers (88, 90) are arranged with their axes of rotation (92, 94) in a V shape in relation to one another.

8. Conveyor belt support as defined in claim 7, characterized in that the alignment rollers (88, 90) form a smaller angle between them with their axes of rotation (92, 94) than lateral regions of the contact surface defined by the support roller (52, 58, 60), on which the conveyor belt (12) rests in a central position.

9. Conveyor belt support as defined in any one of the preceding claims, characterized in that the alignment rollers (88', 90') are located with their axes of rotation (92, 94) in one plane (72) together with the roller axis (66, 68, 70) of the support roller (52, 58, 60).

10. Conveyor belt support as defined in claim 9, characterized in that the alignment rollers (88', 90') are arranged on both sides of the support roller or the support rollers (52, 58, 60).

11. Conveyor belt support as defined in claim 10, characterized in that the alignment rollers (88', 90') are arranged so as to adjoin outer ends of the support roller or the support rollers (52, 58, 60).

12. Conveyor belt support as defined in any one of the preceding claims, characterized in that the alignment rollers (88, 90) are arranged with their axes of rotation (92, 94) in a plane (84) arranged at a distance from the plane (72) of the roller axis (66, 68, 70) of the support roller (52, 58, 60).

13. Conveyor belt support as defined in any one of the preceding claims, characterized in that the alignment rollers (88, 90), when seen in the direction of conveyance (82), are arranged in front of the support roller (52, 58, 60).

14. Conveyor belt support as defined in any one of the preceding claims, characterized in that the alignment rollers (88, 90) are arranged so as to be movable transversely to the direction of conveyance (82) towards or away from the conveyor belt (12).

15. Conveyor belt support as defined in claim 14, characterized in that with the pivoting of the rotary frame (50) into a pivot position guiding the conveyor belt (12) back into the central position a movement of the alignment roller (88) driven during the shifting of the conveyor belt (12) out of the central position takes place transversely to the direction of conveyance (82) in a direction away from the conveyor belt (12).

16. Conveyor belt support as defined in claim 15, characterized in that in the maximum pivot position of the rotary frame (50) the alignment roller (88) driven first when the conveyor belt (12) shifts out of the central position is no longer acted upon by the conveyor belt (12).

17. Conveyor belt support as defined in any one of claims 13 to 16, characterized in that during the pivoting of the rotary frame (50) into a pivot position guiding the conveyor belt (12) back into the central position a movement of the alignment roller (90) located opposite the side where the conveyor belt shifts outwards takes place transversely to the direction of conveyance (82) in the direction towards the conveyor belt (12).

18. Conveyor belt support as defined in claim 17, characterized in that the alignment roller (90) located opposite the side where the conveyor belt (12) shifts out of the central position is movable transversely to the direction of conveyance (82) to such an extent that it is driven by the conveyor belt in the maximum pivot position of the rotary frame (50).

19. Conveyor belt support as defined in claim 17 or 18, characterized in that the alignment roller (90) located opposite the side of the shifting out of the central position is driven during the pivoting of the rotary frame (50) back into the normal position for such a time until the rotary frame (50) has reached the normal position.

20. Conveyor belt support as defined in any one of the preceding claims, characterized in that in the normal position of the rotary frame (50) and central position of the conveyor belt (12) the latter drives neither of the alignment rollers (88, 90).

21. Conveyor belt support as defined in any one of the preceding claims, characterized in that the alignment rollers (88, 90) are movable transversely to the direction of conveyance (82) controlled by the pivoting movement of the rotary frame (50).

22. Conveyor belt support as defined in any one of the preceding claims, characterized in that the two alignment rollers (88, 90) are movable together transversely to the direction of conveyance (82).

23. Conveyor belt support as defined in any one of the preceding claims, characterized in that the two alignment rollers (88, 90) are arranged on the rotary frame (50).

24. Conveyor belt support as defined in any one of claims 1 to 23, characterized in that the alignment rollers (88, 90) are arranged so as to be stationary relative to the base frame (42).

25. Conveyor belt support as defined in any one of the preceding claims 14 to 24, characterized in that the alignment rollers (88, 90) are located with their axes of rotation (92, 94) in a plane (84) arranged at a distance from the axis of rotation (48).

26. Conveyor belt support as defined in claim 25, characterized in that the plane (84) extends parallel to the axis of rotation (48).

27. Belt conveyor comprising conveyor belt supports arranged one after the other in the longitudinal direction of a conveyor belt (12) and having a base frame and support rollers with roller axes arranged rigidly in relation to the base frame, characterized in that a conveyor belt support (40, 40') according to any one of claims 1 to 26 is provided after five to fifty conveyor belt supports (16) with roller axes arranged rigidly in relation to the base frame (42).

28. Belt conveyor as defined in claim 27, characterized in that a conveyor belt support (40, 40') according to claims 1 to 26 is arranged after approximately 10 to approximately 30 conventional conveyor belt supports (16) with roller axes arranged rigidly in relation to the base frame (42).

## Revendications

1. Support de bande transporteuse pour transporteur à bande, comportant un bâti (42, 50) qui comporte un bâti de base (42) et un bâti rotatif (50, 50') apte à pivoter par rapport au bâti de base (42) autour d'un axe de rotation (48), au moins un rouleau (52, 58, 60) de support d'une bande transporteuse du transporteur à bande, lequel rouleau de support est disposé sur le bâti rotatif (50, 50'), et l'axe du rouleau s'étend transversalement par rapport à une direction longitudinale de la bande transporteuse et la bande transporteuse s'appuie sur ce rouleau de support par sa face inférieure, des rouleaux d'orientation (88, 90) prévus en plus du rouleau de support (52, 58, 60) pour retenir la bande transporteuse (12) dans une position centrale dans le transporteur à bande, lesquels rouleaux d'orientation sont disposés de telle sorte que lorsque la bande transporteuse (12) avançant sur le rouleau de support (52, 58, 60) sort latéralement de sa position centrale, elle agit sur au moins l'un des rouleaux d'orientation (88, 90), et fait alors pivoter le bâti rotatif (50, 50') portant le rouleau de support (52, 58, 60) dans une position de rotation dans laquelle le rouleau de support (52, 58, 60) guide la bande transporteuse (12) en direction de sa position centrale, caractérisé en ce qu'un signal électrique peut être créé par chaque rouleau d'orientation (88, 90) en fonction de sa vitesse de rotation, et en ce qu'un pivotement du bâti rotatif (50, 50') par rapport au bâti de base (42) s'effectue par l'intermédiaire d'un servo-entraînement (132, 182) en correspondance aux signaux créés par les rouleaux d'orientation en fonction de leur vitesse de rotation.

2. Support de bande transporteuse selon la revendication 1, caractérisé en ce que chaque rouleau d'orientation (88, 90) entraîne un générateur (128, 130) qui crée un courant d'alimentation pour le servo-entraînement (132, 182) faisant tourner le bâti rotatif (50, 50').

3. Support de bande transporteuse selon la revendication 1, caractérisé en ce que chaque rouleau d'orientation (88, 90) agit sur un capteur (148, 150) qui délivre un signal dépendant de la vitesse de rotation à une commande (152) du servo-entraînement (132, 182).

4. Support de bande transporteuse pour transporteur à bande, comportant un bâti qui comporte un bâti de base (42) et un bâti rotatif (50, 50') apte à pivoter par rapport au bâti de base (42) autour d'un axe de rotation (48), au moins un rouleau (52, 58, 60) de support d'une bande transporteuse du transporteur à bande, lequel rouleau de support est disposé sur le bâti rotatif (50, 50'), et l'axe du rouleau s'étend transversalement par rapport à une direction longitudinale de la bande transporteuse et la bande transporteuse s'appuie sur ce rouleau de support par sa face inférieure, des rouleaux d'orientation (88, 90) prévus en plus du rouleau de support (52, 58, 60) pour retenir la bande transporteuse (12) dans une position centrale dans le transporteur à bande, lesquels rouleaux d'orientation sont disposés de telle sorte que lorsque la bande transporteuse (12) avançant sur le rouleau de support (52, 58, 60) sort latéralement de sa position centrale, elle agit sur au moins l'un des rouleaux d'orientation (88, 90) et fait alors pivoter le bâti rotatif (50, 50') portant le rouleau de support (52, 58, 60) dans une position de rotation dans laquelle le rouleau de support (52, 58, 60) guide la bande transporteuse (12) en direction de sa position centrale, un système hydraulique (200) qui comporte un entraînement hydraulique (132) faisant pivoter le bâti rotatif (50, 50') par rapport au bâti de base (42) et une pompe hydraulique (228, 230) associée à chacun des rouleaux d'orientation (88, 90), caractérisé en ce que par une conduite d'aspiration (238, 240) qui lui est associée, chacune des pompes hydrauliques (228, 230) aspire du fluide hydraulique dans une cuve hydraulique (224), en ce que l'une des pompes hydrauliques (228, 230) alimente l'une des conduites sous pression (206, 210) conduisant à l'entraînement hydraulique (232), en ce que l'autre pompe hydraulique (230, 228) alimente l'autre des conduites sous pression (206, 210) conduisant à l'entraînement hydraulique (232) et en ce que le système hydraulique (200) comporte un double clapet de pression (220) situé entre les deux conduites de pression (206, 210) conduisant à l'entraînement hydraulique (232), lequel clapet relie la conduite sous pression (206, 210) à pression inférieure à la cuve hydraulique (224) par l'intermédiaire d'une conduite de retour (222).

5. Support de bande transporteuse selon la revendication 4, caractérisé en ce que les pompes hydrauliques (228', 230') peuvent fonctionner en entraînement dans deux sens de rotation mutuellement opposés.

6. Support de bande transporteuse selon la revendication 4 ou 5, caractérisé en ce que le système hydraulique (200) comporte un clapet anti-retour (202) à double déblocage situé en amont de l'entraînement hydraulique (232).

7. Support de bande transporteuse selon l'une des revendications précédentes, caractérisé en ce que les rouleaux d'orientation (88, 90) sont disposés l'un par rapport à l'autre avec leurs axes de rotation (92, 94) en forme de V.

8. Support de bande transporteuse selon la revendication 7, caractérisé en ce que les axes de rotation (92, 94) des rouleaux d'orientation (88, 90) forment entre eux un angle plus petit que celui des zones latérales de la surface d'appui définie par les rouleaux de support (52, 58, 60) et sur laquelle la bande transporteuse (12) repose en position centrale.

9. Support de bande transporteuse selon l'une des revendications précédentes, caractérisé en ce que les axes de rotation (92, 94) des rouleaux d'orientation (88', 90') sont situés dans un plan (72) commun à l'axe (66, 68, 70) du rouleau de support (52, 58, 60).

10. Support de bande transporteuse selon la revendication 9, caractérisé en ce que les rouleaux d'orientation (88', 90') sont disposés des deux côtés du ou des rouleaux de support (52, 58, 60).

11. Support de bande transporteuse selon la revendication 10, caractérisé en ce que les rouleaux d'orientation (88', 90') sont disposés au raccord des extrémités extérieures du rouleau de support ou des rouleaux de support (52, 58, 60).

12. Support de bande transporteuse selon l'une des revendications précédentes, caractérisé en ce que les axes de rotation (92, 94) des rouleaux d'orientation (88, 90) sont disposés dans un plan (84) qui est situé à distance du plan (72) des axes (66, 68, 70) des rouleaux de support (52, 58, 60).

13. Support de bande transporteuse selon l'une des revendications précédentes, caractérisé en ce que, vus dans la direction (82) du transport, les rouleaux d'orientation (88, 90) sont disposés en avant du rouleau de support (52, 58, 60).

14. Support de bande transporteuse selon l'une des revendications précédentes, caractérisé en ce que les rouleaux d'orientation (88, 90) sont disposés sur la bande transporteuse (12) transversalement par rapport à la direction (82) du transport et peuvent être rapprochés ou éloignés de cette dernière.

15. Support de bande transporteuse selon la revendication 14, caractérisé en ce qu'avec le pivotement du bâti rotatif (50) dans une position de pivotement qui ramène la bande transporteuse (12) dans la position centrale, il s'effectue un déplacement du rouleau d'orientation (88) entraîné par la bande transporteuse (12) lorsqu'elle sort de sa position centrale, transversalement par rapport à la direction (82) du transport, dans une direction qui s'éloigne de la bande transporteuse (12).

16. Support de bande transporteuse selon la revendication 15, caractérisé en ce que lorsque le bâti rotatif (50) se trouve dans sa position de pivotement maximal, le rouleau d'orientation (88) entraîné le premier par la bande transporteuse (12) lorsqu'elle quitte sa position centrale n'est plus attaqué par la bande transporteuse (12).

17. Support de bande transporteuse selon l'une des revendications 13 à 16, caractérisé en ce que lorsque le bâti rotatif (50) pivote dans une position de pivotement qui ramène la bande transporteuse (12) dans sa position centrale, il s'effectue un déplacement du rouleau d'orientation (90) situé du côté opposé de la sortie de la bande transporteuse, transversalement à la direction (82) du transport, en direction de la bande transporteuse (12).

18. Support de bande transporteuse selon la revendication 17, caractérisé en ce que le rouleau d'orientation (90) situé du côté opposé à celui de la sortie de la bande transporteuse (12) hors de sa position centrale peut être déplacé transversalement par rapport à la direction (82) du transport d'une distance telle que lorsque le bâti rotatif (50) se trouve dans sa position de pivotement maximal, il peut être entraîné par la bande transporteuse.

19. Support de bande transporteuse selon la revendication 17 ou 18, caractérisé en ce que le rouleau d'orientation (90) situé du côté opposé à celui de la sortie de la position centrale, est entraîné dans sa position de base lorsque le bâti rotatif (50) pivote en retour, jusqu'à ce que le bâti rotatif (50) ait atteint sa position de base.

20. Support de bande transporteuse selon l'une des revendications précédentes, caractérisé en ce que lorsque le bâti rotatif (50) se trouve dans sa position de base et lorsque la bande transporteuse (12) est dans sa position centrale, cette dernière n'entraîne aucun des rouleaux d'orientation (88, 90).

21. Support de bande transporteuse selon l'une des revendications précédentes, caractérisé en ce que les rouleaux d'orientation (88, 90) commandés par le déplacement de pivotement du bâti rotatif (50) peuvent être déplacés transversalement par rapport à la direction (82) du transport.

22. Support de bande transporteuse selon l'une des revendications précédentes, caractérisé en ce que les deux rouleaux d'orientation (88, 90) peuvent être déplacés en commun transversalement par rapport à la direction (82) du transport.

23. Support de bande transporteuse selon les revendications précédentes, caractérisé en ce que les deux rouleaux d'orientation (88, 90) sont disposés sur le bâti rotatif (50).

24. Support de bande transporteuse selon l'une des revendications 1 à 23, caractérisé en ce que les rouleaux d'orientation (88, 90) sont disposés fixement par rapport au bâti de base (42).

25. Support de bande transporteuse selon l'une des revendications précédentes 14 à 24, caractérisé en ce que les axes de rotation (92, 94) des rouleaux d'orientation (88, 90) sont situés dans un plan (84) qui est situé à distance de l'axe de rotation (48).

26. Support de bande transporteuse selon la revendication 25, caractérisé en ce que le plan (84) s'étend parallèlement à l'axe de rotation (48).

27. Transporteur à bande comportant dans le sens de longueur d'une bande transporteuse (12) des supports de bande transporteuse disposés l'un sur l'autre et comportant un bâti de base et des rouleaux de support dont les axes des rouleaux sont disposés fixement par rapport au bâti de base, caractérisé en ce que qu'après cinq à cinquante supports de bande transporteuse (16) dont les axes sont disposés fixement par rapport au bâti de base (42), il est prévu un support de bande transporteuse (40, 40') selon d'une des revendications 1 à 26.

28. Transporteur à bande selon la revendication 27, caractérisé en ce qu'un support de bande transporteuse (40, 40') selon les revendications 1 à 26 est disposé après environ 10 à environ 30 supports classiques de bande transporteuse (16), dont les axes de rouleau sont disposés fixement par rapport au bâti de base (42).
